# EUROPEAN PATENT SPECIFICATION

(11) **EP 2 306 284 B1**
(45) Date of publication and mention of the grant of the patent: **26.08.2015**
(21) Application number: 10175998.3
(22) Date of filing: 09.09.2010
(51) Int. Cl.: G06F 3/0488

(54) **Device, method, and graphical user interface using mid-drag gestures**
Vorrichtung, Verfahren und grafische Benutzeroberfläche mithilfe halb gezogener Gesten
Dispositif, procédé et interface utilisateur graphique utilisant des gestes mid-drag

(30) Priority: 25.09.2009 US 567677; 25.09.2009 US 567689; 25.09.2009 US 567695
(43) Date of publication of application: 06.04.2011
(73) Proprietor: APPLE INC., Cupertino, CA 95014 (US)
(72) Inventor: Rapp, Peter William, Pittsburgh, PA 15217 (US); Leffert, Akiva Dov, San Francisco, CA 94114 (US); Marr, Jason Robert, Sunnyvale, CA 94087 (US); Weeldreyer, Christopher Douglas, San Carlos, CA 94070 (US); Capela, Jay Christopher, Santa Cruz, CA 95060 (US)
(74) Representative: Howell, Matthew Dafydd

(56) References cited:
- EP-A1- 1 942 401
- WO-A1-96/30890
- US-A1- 2007 291 009
- US-A1- 2008 297 483
- ACM, 2 PENN PLAZA, SUITE 701 - NEW YORK USA, 15 October 2004 (2004-10-15), XP040010467,

## Description

### TECHNICAL FIELD

The disclosed embodiments relate generally to electronic devices with touch-sensitive surfaces, and more particularly, to electronic devices with touch-sensitive surfaces that use mid-drag gestures, microgestures within gestures, and other gesture modification motions, etc. to modify or alter user interface behavior.

### BACKGROUND

The use of touch-sensitive surfaces as input devices for computers and other electronic computing devices has increased significantly in recent years. Exemplary touch-sensitive surfaces include touch pads and touch screen displays. Such surfaces are widely used to manipulate user interface objects on a display.

In these devices, the need for rapid object manipulations, mode changes, and simple programmatic input to modify or alter user interface behavior is critical. In some instances, users benefit from being able to alter their input gesture on-the-fly or in real-time.

But existing methods for real-time user interface input gesture alterations and modifications are cumbersome and inefficient. For example, using a non-contiguous sequence of gesture inputs, with at least one gesture to serve as a behavior modifier, is tedious and creates a significant cognitive burden on a user. In addition, existing methods take longer than necessary, thereby wasting energy. This latter consideration is particularly important in battery-operated devices.

EP 1 942 401 discloses a multimedia communication device with touch screen responsive to gestures for controlling, manipulating and editing media files wherein single finger contacts are detected on the touch screen and a response is generated in accordance with the single finger gesture such as rotating an object displayed on the touch screen.

Accordingly, there is a need for computing devices with faster, more efficient methods and interfaces for modifying or altering user interface behavior. Such methods and interfaces may complement or replace conventional methods for modifying or altering user interface behavior. Such methods and interfaces reduce the cognitive burden on a user and produce a more efficient human-machine interface. For battery-operated computing devices, such methods and interfaces conserve power and increase the time between battery charges.

### SUMMARY

The above deficiencies and other problems associated with user interfaces for computing devices with touch-sensitive surfaces are reduced or eliminated by the invention as defined in claims 1, 14 and 15. Embodiments of the invention are defined in the dependent claims.

In some embodiments, the device is a desktop computer. In some embodiments, the device is portable (e.g., a notebook computer, tablet computer, or handheld device). In some embodiments, the device has a touchpad. In some embodiments, the device has a touch-sensitive display (also known as a "touch screen" or "touch screen display"). In some embodiments, the device has a graphical user interface (GUI), one or more processors, memory and one or more modules, programs or sets of instructions stored in the memory for performing multiple functions. In some embodiments, the user interacts with the GUI primarily through finger contacts and gestures on the touch-sensitive surface. In some embodiments, the functions may include image editing, drawing, presenting, word processing, website creating, disk authoring, spreadsheet making, game playing, telephoning, video conferencing, e-mailing, instant messaging, workout support, digital photographing, digital videoing, web browsing, digital music playing, and/or digital video playing. Executable instructions for performing these functions may be included in a computer readable storage medium or other computer program product configured for execution by one or more processors.

In accordance with some embodiments, a method is performed at a multifunction device with a display and a touch-sensitive surface. The method includes: displaying a user interface on the display, and while detecting a single finger contact on the touch-sensitive surface: detecting a first movement of the single finger contact that corresponds to a first portion of a first gesture on the touch-sensitive surface; performing a first responsive behavior within the user interface in accordance with the first portion of the first gesture; after detecting the first movement, detecting a second movement of the single finger contact on the touch-sensitive surface that corresponds to a second gesture that is different from the first gesture; performing a second responsive behavior within the user interface in response to the second gesture, wherein the second responsive behavior is different from the first responsive behavior; after detecting the second movement, detecting a third movement of the single finger contact on the touch-sensitive surface, wherein the third movement corresponds to a second portion of the first gesture; and, performing a third responsive behavior within the user interface in accordance with the second portion of the first gesture, wherein the third responsive behavior is different from the first responsive behavior.

In accordance with some embodiments, a multifunction device includes a display, a touch-sensitive surface, one or more processors, memory, and one or more programs. The one or more programs are stored in the memory and configured to be executed by the one or more processors. The one or more programs include instructions for: displaying a user interface on the display, and while detecting a single finger contact on the touch-sensitive surface: detecting a first movement of the single finger contact that corresponds to a first portion of a first gesture on the touch-sensitive surface; performing a first responsive behavior within the user interface in accordance with the first portion of the first gesture; after detecting the first movement, detecting a second movement of the single finger contact on the touch-sensitive surface that corresponds to a second gesture that is different from the first gesture; performing a second responsive behavior within the user interface in response to the second gesture, wherein the second responsive behavior is different from the first responsive behavior; after detecting the second movement, detecting a third movement of the single finger contact on the touch-sensitive surface, wherein the third movement corresponds to a second portion of the first gesture; and, performing a third responsive behavior within the user interface in accordance with the second portion of the first gesture, wherein the third responsive behavior is different from the first responsive behavior.

In accordance with some embodiments, a computer readable storage medium has stored therein instructions which when executed by a multifunction device with a display and a touch-sensitive surface, cause the device to: display a user interface on the display, and while detecting a single finger contact on the touch-sensitive surface: detect a first movement of the single finger contact that corresponds to a first portion of a first gesture on the touch-sensitive surface; perform a first responsive behavior within the user interface in accordance with the first portion of the first gesture; after detecting the first movement, detect a second movement of the single finger contact on the touch-sensitive surface that corresponds to a second gesture that is different from the first gesture; perform a second responsive behavior within the user interface in response to the second gesture, wherein the second responsive behavior is different from the first responsive behavior; after detecting the second movement, detect a third movement of the single finger contact on the touch-sensitive surface, wherein the third movement corresponds to a second portion of the first gesture; and, perform a third responsive behavior within the user interface in accordance with the second portion of the first gesture, wherein the third responsive behavior is different from the first responsive behavior.

In accordance with some embodiments, a graphical user interface on a multifunction device with a display, a touch-sensitive surface, a memory, and one or more processors to execute one or more programs stored in the memory includes a user interface on the display, wherein: while detecting a single finger contact on the touch-sensitive surface: a first movement of the single finger contact that corresponds to a first portion of a first gesture is detected on the touch-sensitive surface; a first responsive behavior is performed within the user interface in accordance with the first portion of the first gesture; after detecting the first movement, a second movement of the single finger contact is detected on the touch-sensitive surface that corresponds to a second gesture that is different from the first gesture; a second responsive behavior is performed within the user interface in response to the second gesture, wherein the second responsive behavior is different from the first responsive behavior; after detecting the second movement, a third movement of the single finger contact is detected on the touch-sensitive surface, wherein the third movement corresponds to a second portion of the first gesture; and, a third responsive behavior is performed within the user interface in accordance with the second portion of the first gesture, wherein the third responsive behavior is different from the first responsive behavior.

In accordance with some embodiments, a multifunction device includes: a display; a touch-sensitive surface; means for displaying a user interface on the display, and while detecting a single finger contact on the touch-sensitive surface: means for detecting a first movement of the single finger contact that corresponds to a first portion of a first gesture on the touch-sensitive surface; means for performing a first responsive behavior within the user interface in accordance with the first portion of the first gesture; after detecting the first movement, means for detecting a second movement of the single finger contact on the touch-sensitive surface that corresponds to a second gesture that is different from the first gesture; means for performing a second responsive behavior within the user interface in response to the second gesture, wherein the second responsive behavior is different from the first responsive behavior; after detecting the second movement, means for detecting a third movement of the single finger contact on the touch-sensitive surface, wherein the third movement corresponds to a second portion of the first gesture; and, means for performing a third responsive behavior within the user interface in accordance with the second portion of the first gesture, wherein the third responsive behavior is different from the first responsive behavior.

In accordance with some embodiments, an information processing apparatus for use in a multifunction device with a display and a touch-sensitive surface includes: means for displaying a user interface on the display, and while detecting a single finger contact on the touch-sensitive surface: means for detecting a first movement of the single finger contact that corresponds to a first portion of a first gesture on the touch-sensitive surface; means for performing a first responsive behavior within the user interface in accordance with the first portion of the first gesture; after detecting the first movement, means for detecting a second movement of the single finger contact on the touch-sensitive surface that corresponds to a second gesture that is different from the first gesture; means for performing a second responsive behavior within the user interface in response to the second gesture, wherein the second responsive behavior is different from the first responsive behavior; after detecting the second movement, means for detecting a third movement of the single finger contact on the touch-sensitive surface, wherein the third movement corresponds to a second portion of the first gesture; and, means for performing a third responsive behavior within the user interface in accordance with the second portion of the first gesture, wherein the third responsive behavior is different from the first responsive behavior.

In accordance with some embodiments, a method is performed at a multifunction device with a display and a touch-sensitive surface. The method includes: displaying a user interface on the display; while detecting three finger contacts on the touch-sensitive surface, wherein the three finger contacts are substantially aligned on an axis: detecting a first movement of the three finger contacts that corresponds to a first portion of a first gesture on the touch-sensitive surface; performing a first responsive behavior within the user interface in accordance with the first portion of the first gesture; after detecting the first movement, detecting a second gesture that is a movement of one of the three finger contacts away from the axis; performing a second behavior within the user interface in response to the second gesture, wherein the second behavior is different from the first responsive behavior; after detecting the second gesture, detecting a third movement of the three finger contacts on the touch-sensitive surface, wherein the third movement corresponds to a second portion of the first gesture; and, performing a third responsive behavior within the user interface in accordance with the second portion of the first gesture, wherein the third responsive behavior is different from the first responsive behavior.

In accordance with some embodiments, a multifunction device includes a display, a touch-sensitive surface, one or more processors, memory, and one or more programs. The one or more programs are stored in the memory and configured to be executed by the one or more processors. The one or more programs include instructions for: displaying a user interface on the display; while detecting three finger contacts on the touch-sensitive surface, wherein the three finger contacts are substantially aligned on an axis: detecting a first movement of the three finger contacts that corresponds to a first portion of a first gesture on the touch-sensitive surface; performing a first responsive behavior within the user interface in accordance with the first portion of the first gesture; after detecting the first movement, detecting a second gesture that is a movement of one of the three finger contacts away from the axis; performing a second behavior within the user interface in response to the second gesture, wherein the second behavior is different from the first responsive behavior; after detecting the second gesture, detecting a third movement of the three finger contacts on the touch-sensitive surface, wherein the third movement corresponds to a second portion of the first gesture; and, performing a third responsive behavior within the user interface in accordance with the second portion of the first gesture, wherein the third responsive behavior is different from the first responsive behavior.

In accordance with some embodiments, a computer readable storage medium has stored therein instructions which when executed by a multifunction device with a display and a touch-sensitive surface, cause the device to: display a user interface on the display; while detecting three finger contacts on the touch-sensitive surface, wherein the three finger contacts are substantially aligned on an axis: detect a first movement of the three finger contacts that corresponds to a first portion of a first gesture on the touch-sensitive surface; perform a first responsive behavior within the user interface in accordance with the first portion of the first gesture; after detecting the first movement, detect a second gesture that is a movement of one of the three finger contacts away from the axis; perform a second behavior within the user interface in response to the second gesture, wherein the second behavior is different from the first responsive behavior; after detecting the second gesture, detect a third movement of the three finger contacts on the touch-sensitive surface, wherein the third movement corresponds to a second portion of the first gesture; and, perform a third responsive behavior within the user interface in accordance with the second portion of the first gesture, wherein the third responsive behavior is different from the first responsive behavior.

In accordance with some embodiments, a graphical user interface on a multifunction device with a display, a touch-sensitive surface, a memory, and one or more processors to execute one or more programs stored in the memory includes a user interface on the display, wherein: while detecting three finger contacts on the touch-sensitive surface, wherein the three finger contacts are substantially aligned on an axis: a first movement of the three finger contacts that corresponds to a first portion of a first gesture is detected on the touch-sensitive surface; a first responsive behavior is performed within the user interface in accordance with the first portion of the first gesture; after detecting the first movement, a second gesture that is a movement of one of the three finger contacts away from the axis is detected on the touch-sensitive surface; a second behavior is performed within the user interface in response to the second gesture, wherein the second behavior is different from the first responsive behavior; after detecting the second gesture, a third movement of the three finger contacts is detected on the touch-sensitive surface, wherein the third movement corresponds to a second portion of the first gesture; and, a third responsive behavior is performed within the user interface in accordance with the second portion of the first gesture, wherein the third responsive behavior is different from the first responsive behavior.

In accordance with some embodiments, a multifunction device includes: a display; a touch-sensitive surface; means for displaying a user interface on the display, and while detecting three finger contacts on the touch-sensitive surface, wherein the three finger contacts are substantially aligned on an axis: means for detecting a first movement of the three finger contacts that corresponds to a first portion of a first gesture on the touch-sensitive surface; means for performing a first responsive behavior within the user interface in accordance with the first portion of the first gesture; after detecting the first movement, means for detecting a second gesture that is a movement of one of the three finger contacts away from the axis; means for performing a second behavior within the user interface in response to the second gesture, wherein the second behavior is different from the first responsive behavior; after detecting the second gesture, means for detecting a third movement of the three finger contacts on the touch-sensitive surface, wherein the third movement corresponds to a second portion of the first gesture; and, means for performing a third responsive behavior within the user interface in accordance with the second portion of the first gesture, wherein the third responsive behavior is different from the first responsive behavior.

In accordance with some embodiments, an information processing apparatus for use in a multifunction device with a display and a touch-sensitive surface includes: means for displaying a user interface on the display, and while detecting three finger contacts on the touch-sensitive surface, wherein the three finger contacts are substantially aligned on an axis: means for detecting a first movement of the three finger contacts that corresponds to a first portion of a first gesture on the touch-sensitive surface; means for performing a first responsive behavior within the user interface in accordance with the first portion of the first gesture; means for detecting a second gesture that is a movement of one of the three finger contacts away from the axis; means for performing a second responsive behavior within the user interface in response to the second gesture, wherein the second responsive behavior is different from the first responsive behavior; means for detecting a third movement of the three finger contacts on the touch-sensitive surface, wherein the third movement corresponds to a second portion of the first gesture; and, means for performing a third responsive behavior within the user interface in accordance with the second portion of the first gesture, wherein the third responsive behavior is different from the first responsive behavior.

In accordance with some embodiments, a method is performed at a multifunction device with a display and a touch-sensitive surface. The method includes: displaying a user interface on the display; detecting a first portion of a single finger gesture on the touch-sensitive surface, wherein the single finger gesture has a finger contact with a first size; performing a first responsive behavior within the user interface in accordance with the first portion of the first gesture; after detecting the first portion of the single finger gesture, detecting an increase in size of the single finger contact on the touch-sensitive surface; in response to detecting the increase in size of the single finger contact, performing a second responsive behavior within the user interface different from the first responsive behavior; after detecting the increase in size of the single finger contact, detecting a second portion of the single finger gesture on the touch-sensitive surface; and, performing a third responsive behavior within the user interface in accordance with the second portion of the single finger gesture, wherein the third responsive behavior is different from the first responsive behavior.

In accordance with some embodiments, a multifunction device includes a display, a touch-sensitive surface, one or more processors, memory, and one or more programs. The one or more programs are stored in the memory and configured to be executed by the one or more processors. The one or more programs include instructions for: displaying a user interface on the display; detecting a first portion of a single finger gesture on the touch-sensitive surface, wherein the single finger gesture has a finger contact with a first size; performing a first responsive behavior within the user interface in accordance with the first portion of the first gesture; after detecting the first portion of the single finger gesture, detecting an increase in size of the single finger contact on the touch-sensitive surface; in response to detecting the increase in size of the single finger contact, performing a second responsive behavior within the user interface different from the first responsive behavior; after detecting the increase in size of the single finger contact, detecting a second portion of the single finger gesture on the touch-sensitive surface; and, performing a third responsive behavior within the user interface in accordance with the second portion of the single finger gesture, wherein the third responsive behavior is different from the first responsive behavior.

In accordance with some embodiments, a computer readable storage medium has stored therein instructions which when executed by a multifunction device with a display and a touch-sensitive surface, cause the device to: display a user interface on the display; detect a first portion of a single finger gesture on the touch-sensitive surface, wherein the single finger gesture has a finger contact with a first size; perform a first responsive behavior within the user interface in accordance with the first portion of the first gesture; after detecting the first portion of the single finger gesture, detect an increase in size of the single finger contact on the touch-sensitive surface; in response to detecting the increase in size of the single finger contact, perform a second responsive behavior within the user interface different from the first responsive behavior; after detecting the increase in size of the single finger contact, detect a second portion of the single finger gesture on the touch-sensitive surface; and, perform a third responsive behavior within the user interface in accordance with the second portion of the single finger gesture, wherein the third responsive behavior is different from the first responsive behavior.

In accordance with some embodiments, a graphical user interface on a multifunction device with a display, a touch-sensitive surface, a memory, and one or more processors to execute one or more programs stored in the memory, includes a user interface on the display, wherein: a first portion of a single finger gesture is detected on the touch-sensitive surface, wherein the single finger gesture has a finger contact with a first size; a first responsive behavior is performed within the user interface in accordance with the first portion of the first gesture; after detecting the first portion of the single finger gesture, an increase in size of the single finger contact is detected on the touch-sensitive surface; in response to detecting the increase in size of the single finger contact, a second responsive behavior is performed within the user interface different from the first responsive behavior; after detecting the increase in size of the single finger contact, a second portion of the single finger gesture is detected on the touch-sensitive surface; and, a third responsive behavior is performed within the user interface in accordance with the second portion of the single finger gesture, wherein the third responsive behavior is different from the first responsive behavior.

In accordance with some embodiments, a multifunction device includes: a display; a touch-sensitive surface; means for displaying a user interface on the display; means for detecting a first portion of a single finger gesture on the touch-sensitive surface, wherein the single finger gesture has a finger contact with a first size; means for performing a first responsive behavior within the user interface in accordance with the first portion of the first gesture; after detecting the first portion of the single finger gesture, means for detecting an increase in size of the single finger contact on the touch-sensitive surface; in response to detecting the increase in size of the single finger contact, means for performing a second responsive behavior within the user interface different from the first responsive behavior; after detecting the increase in size of the single finger contact, means for detecting a second portion of the single finger gesture on the touch-sensitive surface; and, means for performing a third responsive behavior within the user interface in accordance with the second portion of the single finger gesture, wherein the third responsive behavior is different from the first responsive behavior.

In accordance with some embodiments, an information processing apparatus for use in a multifunction device with a display and a touch-sensitive surface includes: means for displaying a user interface on the display; means for detecting a first portion of a single finger gesture on the touch-sensitive surface, wherein the single finger gesture has a finger contact with a first size; means for performing a first responsive behavior within the user interface in accordance with the first portion of the first gesture; after detecting the first portion of the single finger gesture, means for detecting an increase in size of the single finger contact on the touch-sensitive surface; in response to detecting the increase in size of the single finger contact, means for performing a second responsive behavior within the user interface different from the first responsive behavior; after detecting the increase in size of the single finger contact, means for detecting a second portion of the single finger gesture on the touch-sensitive surface; and, means for performing a third responsive behavior within the user interface in accordance with the second portion of the single finger gesture, wherein the third responsive behavior is different from the first responsive behavior.

In accordance with some embodiments, a method is performed at a multifunction device with a display and a touch-sensitive surface. The method includes: displaying a user interface on the display, and while simultaneously detecting a first point of contact and a second point of contact on the touch-sensitive surface, wherein the first and second points of contact define two points on opposite sides of a perimeter of a circle: detecting a first portion of a first gesture made with at least one of the first and second points of contact on the touch-sensitive surface; performing a first responsive behavior within the user interface in accordance with the first gesture; after detecting the first portion of the first gesture, detecting a second gesture made with at least one of the first and second points of contact on the touch-sensitive surface, wherein the second gesture deviates from the perimeter of the circle; performing a second responsive behavior within the user interface in response to the second gesture, wherein the second responsive behavior is different from the first responsive behavior; after detecting the second gesture, detecting a second portion of the first gesture made with the first and second points of contact on the touch-sensitive surface; and, performing a third responsive behavior within the user interface in accordance with the second portion of the first gesture, wherein the third responsive behavior is different from the first responsive behavior

In accordance with some embodiments, a multifunction device includes a display, a touch-sensitive surface, one or more processors, memory, and one or more programs. The one or more programs are stored in the memory and configured to be executed by the one or more processors. The one or more programs include instructions for: displaying a user interface on the display, and while simultaneously detecting a first point of contact and a second point of contact on the touch-sensitive surface, wherein the first and second points of contact define two points on opposite sides of a perimeter of a circle: detecting a first portion of a first gesture made with at least one of the first and second points of contact on the touch-sensitive surface; performing a first responsive behavior within the user interface in accordance with the first gesture; after detecting the first portion of the first gesture, detecting a second gesture made with at least one of the first and second points of contact on the touch-sensitive surface, wherein the second gesture deviates from the perimeter of the circle; performing a second responsive behavior within the user interface in response to the second gesture, wherein the second responsive behavior is different from the first responsive behavior; after detecting the second gesture, detecting a second portion of the first gesture made with the first and second points of contact on the touch-sensitive surface; and, performing a third responsive behavior within the user interface in accordance with the second portion of the first gesture, wherein the third responsive behavior is different from the first responsive behavior.

In accordance with some embodiments, a computer readable storage medium has stored therein instructions which when executed by a multifunction device with a display and a touch-sensitive surface, cause the device to: display a user interface on the display, and while simultaneously detecting a first point of contact and a second point of contact on the touch-sensitive surface, wherein the first and second points of contact define two points on opposite sides of a perimeter of a circle: detect a first portion of a first gesture made with at least one of the first and second points of contact on the touch-sensitive surface; perform a first responsive behavior within the user interface in accordance with the first gesture; after detecting the first portion of the first gesture, detect a second gesture made with at least one of the first and second points of contact on the touch-sensitive surface, wherein the second gesture deviates from the perimeter of the circle; perform a second responsive behavior within the user interface in response to the second gesture, wherein the second responsive behavior is different from the first responsive behavior; after detecting the second gesture, detect a second portion of the first gesture made with the first and second points of contact on the touch-sensitive surface; and, perform a third responsive behavior within the user interface in accordance with the second portion of the first gesture, wherein the third responsive behavior is different from the first responsive behavior.

In accordance with some embodiments, a graphical user interface on a multifunction device with a display, a touch-sensitive surface, a memory, and one or more processors to execute one or more programs stored in the memory, includes a user interface on the display, wherein: while simultaneously detecting a first point of contact and a second point of contact on the touch-sensitive surface, wherein the first and second points of contact define two points on opposite sides of a perimeter of a circle: a first portion of a first gesture made with at least one of the first and second points of contact is detected on the touch-sensitive surface; a first responsive behavior is performed within the user interface in accordance with the first gesture; after detecting the first portion of the first gesture, a second gesture made with at least one of the first and second points of contact is detected on the touch-sensitive surface, wherein the second gesture deviates from the perimeter of the circle; a second responsive behavior is performed within the user interface in response to the second gesture, wherein the second responsive behavior is different from the first responsive behavior; after detecting the second gesture, a second portion of the first gesture made with the first and second points of contact is detected on the touch-sensitive surface; and, a third responsive behavior within the user interface is performed in accordance with the second portion of the first gesture, wherein the third responsive behavior is different from the first responsive behavior.

In accordance with some embodiments, a multifunction device includes: a display; a touch-sensitive surface; and means for displaying a user interface on the display, and while simultaneously detecting a first point of contact and a second point of contact on the touch-sensitive surface, wherein the first and second points of contact define two points on opposite sides of a perimeter of a circle, the multifunction device also includes means for detecting a first portion of a first gesture made with at least one of the first and second points of contact on the touch-sensitive surface; means for performing a first responsive behavior within the user interface in accordance with the first gesture; after detecting the first portion of the first gesture, means for detecting a second gesture made with at least one of the first and second points of contact on the touch-sensitive surface, wherein the second gesture deviates from he perimeter of the circle; means for performing a second responsive behavior within the user interface in response to the second gesture, wherein the second responsive behavior is different from the first responsive behavior; after detecting the second gesture, means for detecting a second portion of the first gesture made with the first and second points of contact on the touch-sensitive surface; and, means for performing a third responsive behavior within the user interface in accordance with the second portion of the first gesture, wherein the third responsive behavior is different from the first responsive behavior.

In accordance with some embodiments, an information processing apparatus for use in a multifunction device with a display and a touch-sensitive surface includes means for displaying a user interface on the display, and while simultaneously detecting a first point of contact and a second point of contact on the touch-sensitive surface, wherein the first and second points of contact define two points on opposite sides of a perimeter of a circle, the information processing apparatus also includes means for detecting a first portion of a first gesture made with at least one of the first and second points of contact on the touch-sensitive surface; means for performing a first responsive behavior within the user interface in accordance with the first gesture; after detecting the first portion of the first gesture, means for detecting a second gesture made with at least one of the first and second points of contact on the touch-sensitive surface, wherein the second gesture deviates from he perimeter of the circle; means for performing a second responsive behavior within the user interface in response to the second gesture, wherein the second responsive behavior is different from the first responsive behavior; after detecting the second gesture, means for detecting a second portion of the first gesture made with the first and second points of contact on the touch-sensitive surface; and means for performing a third responsive behavior within the user interface in accordance with the second portion of the first gesture, wherein the third responsive behavior is different from the first responsive behavior.

Thus, multifunction devices with displays and touch-sensitive surfaces are provided with faster, more efficient methods and interfaces for modifying or altering user interface behavior, thereby increasing the effectiveness, efficiency, and user satisfaction with such devices. Such methods and interfaces may complement or replace conventional methods for modifying or altering user interface behavior.

### BRIEF DESCRIPTION OF THE DRAWINGS

For a better understanding of the aforementioned embodiments of the invention as well as additional embodiments thereof, reference should be made to the Description of Embodiments below, in conjunction with the following drawings in which like reference numerals refer to corresponding parts throughout the figures.

Figures 1A and 1B are block diagrams illustrating portable multifunction devices with touch-sensitive displays in accordance with some embodiments.

Figure 2 illustrates a portable multifunction device having a touch screen in accordance with some embodiments.

Figure 3 is a block diagram of an exemplary multifunction device with a display and a touch-sensitive surface in accordance with some embodiments.

Figures 4A and 4B illustrate exemplary user interfaces for a menu of applications on a portable multifunction device in accordance with some embodiments.

Figure 4C illustrates an exemplary user interface for a multifunction device with a touch-sensitive surface that is separate from the display in accordance with some embodiments.

Figures 5A-5S illustrate exemplary user interfaces employing mid-drag gestures in accordance with some embodiments.

Figures 6A-6C are flow diagrams illustrating a method of using mid-drag gestures in accordance with some embodiments.

Figure 7 is a flow diagram illustrating a method of using mid-drag gestures in accordance with some embodiments.

Figures 8A-8B are flow diagrams illustrating a method of using mid-drag gestures in accordance with some embodiments.

Figure 9 includes exemplary illustrations of one-finger mid-drag gestures in accordance with some embodiments.

Figure 10 includes exemplary illustrations of two-finger microgestures in accordance with some embodiments.

Figure 11 includes exemplary illustrations of three-finger microgestures in accordance with some embodiments.

### DESCRIPTION OF EMBODIMENTS

Reference will now be made in detail to embodiments, examples of which are illustrated in the accompanying drawings. In the following detailed description, numerous specific details are set forth in order to provide a thorough understanding of the present invention. However, it will be apparent to one of ordinary skill in the art that the present invention may be practiced without these specific details. In other instances, well-known methods, procedures, components, circuits, and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first contact could be termed a second contact, and, similarly, a second contact could be termed a first contact, without departing from the scope of the present invention. The first contact and the second contact are both contacts, but they are not the same contact.

The terminology used in the description of the invention herein is for the purpose of describing particular embodiments only and is not intended to be limiting of the invention. As used in the description of the invention and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

Embodiments of computing devices, user interfaces for such devices, and associated processes for using such devices are described. In some embodiments, the computing device is a portable communications device such as a mobile telephone that also contains other functions, such as PDA and/or music player functions. Exemplary embodiments of portable multifunction devices include, without limitation, the iPhone® and iPod Touch® devices from Apple Inc. of Cupertino, California. Other portable devices such as laptops or tablet computers with touch-sensitive surfaces (e.g., touch screen displays and/or touch pads) may also be used. It should also be understood that, in some embodiments, the device is not a portable communications device, but is a desktop computer with a touch-sensitive surface (e.g., a touch screen display and/or a touch pad).

In the discussion that follows, a computing device that includes a display and a touch-sensitive surface is described. It should be understood, however, that the computing device may include one or more other physical user-interface devices, such as a physical keyboard, a mouse and/or a joystick.

The device supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that may be executed on the device may use at least one common physical user-interface device, such as the touch-sensitive surface. One or more functions of the touch-sensitive surface as well as corresponding information displayed on the device may be adjusted and/or varied from one application to the next and/or within a respective application. In this way, a common physical architecture (such as the touch-sensitive surface) of the device may support the variety of applications with user interfaces that are intuitive and transparent.

The user interfaces may include one or more soft keyboard embodiments. The soft keyboard embodiments may include standard (QWERTY) and/or non-standard configurations of symbols on the displayed icons of the keyboard, such as those described in U.S. Patent Applications 11/459,606, "Keyboards For Portable Electronic Devices," filed July 24, 2006, and 11/459,615, "Touch Screen Keyboards For Portable Electronic Devices," filed July 24, 2006. The keyboard embodiments may include a reduced number of icons (or soft keys) relative to the number of keys in existing physical keyboards, such as that for a typewriter. This may make it easier for users to select one or more icons in the keyboard, and thus, one or more corresponding symbols. The keyboard embodiments may be adaptive. For example, displayed icons may be modified in accordance with user actions, such as selecting one or more icons and/or one or more corresponding symbols. One or more applications on the device may utilize common and/or different keyboard embodiments. Thus, the keyboard embodiment used may be tailored to at least some of the applications. In some embodiments, one or more keyboard embodiments may be tailored to a respective user. For example, one or more keyboard embodiments may be tailored to a respective user based on a word usage history (lexicography, slang, individual usage) of the respective user. Some of the keyboard embodiments may be adjusted to reduce a probability of a user error when selecting one or more icons, and thus one or more symbols, when using the soft keyboard embodiments.

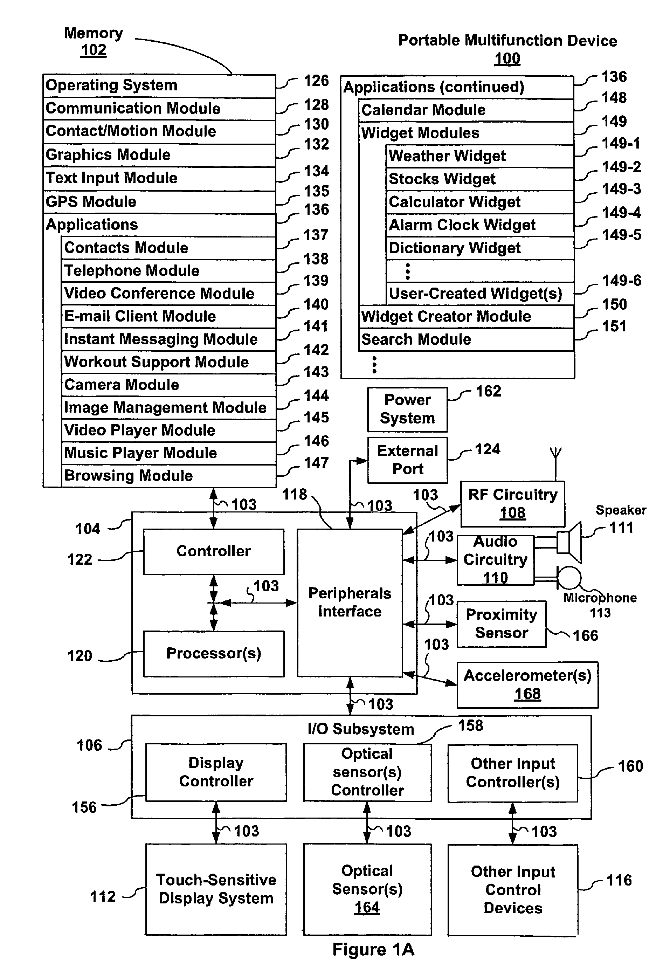

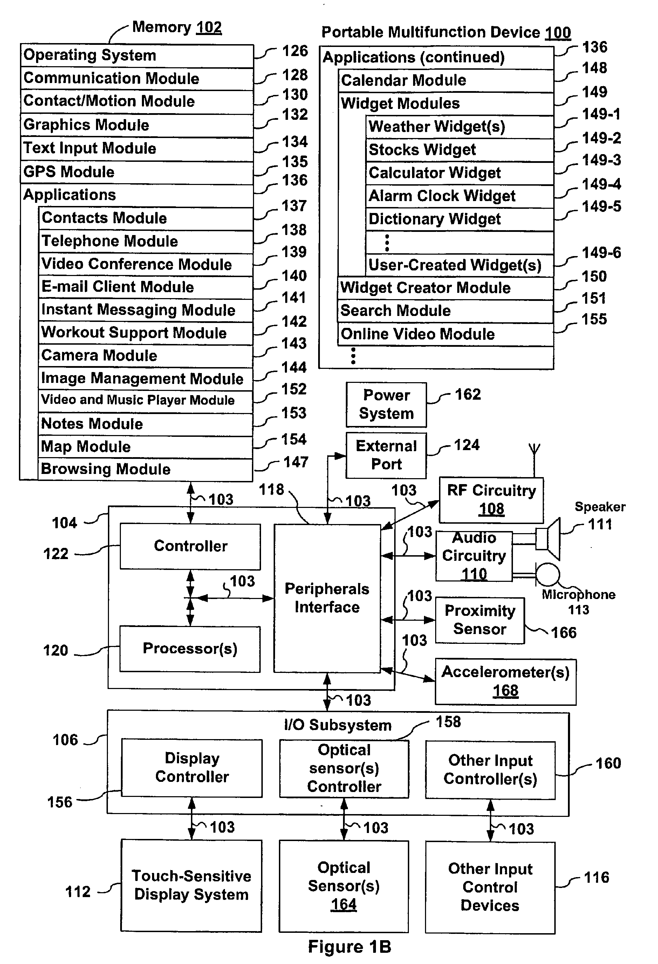

Attention is now directed towards embodiments of portable devices with touch-sensitive displays. Figures 1A and 1B are block diagrams illustrating portable multifunction devices 100 with touch-sensitive displays 112 in accordance with some embodiments. The touch-sensitive display 112 is sometimes called a "touch screen" for convenience, and may also be known as or called a touch-sensitive display system. The device 100 may include a memory 102 (which may include one or more computer readable storage mediums), a memory controller 122, one or more processing units (CPU's) 120, a peripherals interface 118, RF circuitry 108, audio circuitry 110, a speaker 111, a microphone 113, an input/output (I/O) subsystem 106, other input or control devices 116, and an external port 124. The device 100 may include one or more optical sensors 164. These components may communicate over one or more communication buses or signal lines 103.

It should be appreciated that the device 100 is only one example of a portable multifunction device 100, and that the device 100 may have more or fewer components than shown, may combine two or more components, or a may have a different configuration or arrangement of the components. The various components shown in Figures 1A and 1B may be implemented in hardware, software, or a combination of both hardware and software, including one or more signal processing and/or application specific integrated circuits.

Memory 102 may include high-speed random access memory and may also include non-volatile memory, such as one or more magnetic disk storage devices, flash memory devices, or other non-volatile solid-state memory devices. Access to memory 102 by other components of the device 100, such as the CPU 120 and the peripherals interface 118, may be controlled by the memory controller 122.

The peripherals interface 118 couples the input and output peripherals of the device to the CPU 120 and memory 102. The one or more processors 120 run or execute various software programs and/or sets of instructions stored in memory 102 to perform various functions for the device 100 and to process data.

In some embodiments, the peripherals interface 118, the CPU 120, and the memory controller 122 may be implemented on a single chip, such as a chip 104. In some other embodiments, they may be implemented on separate chips.

The RF (radio frequency) circuitry 108 receives and sends RF signals, also called electromagnetic signals. The RF circuitry 108 converts electrical signals to/from electromagnetic signals and communicates with communications networks and other communications devices via the electromagnetic signals. The RF circuitry 108 may include well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. The RF circuitry 108 may communicate with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The wireless communication may use any of a plurality of communications standards, protocols and technologies, including but not limited to Global System for Mobile Communications (GSM), Enhanced Data GSM Environment (EDGE), high-speed downlink packet access (HSDPA), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

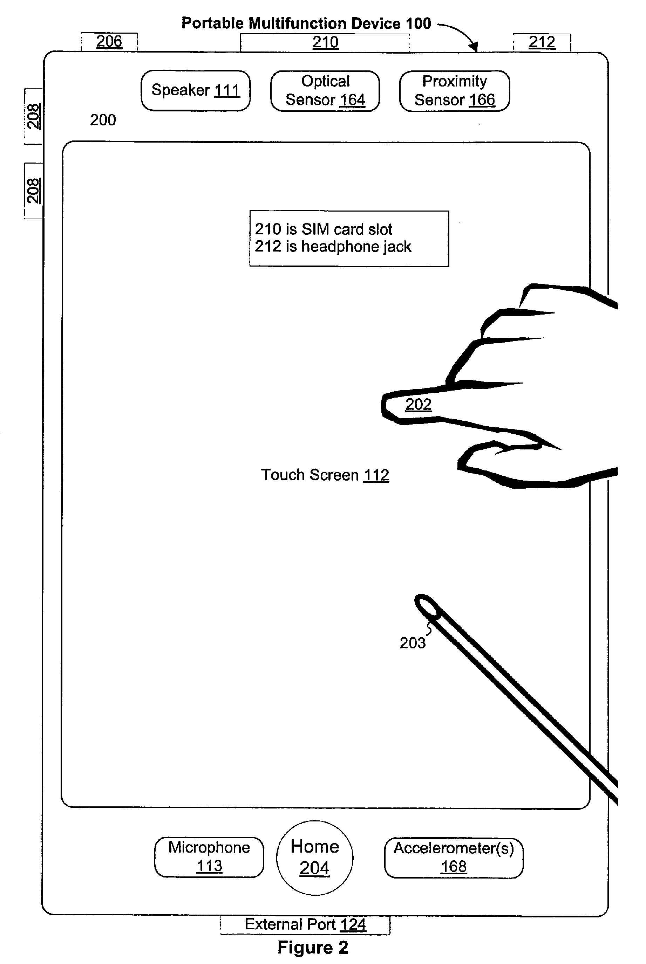

The audio circuitry 110, the speaker 111, and the microphone 113 provide an audio interface between a user and the device 100. The audio circuitry 110 receives audio data from the peripherals interface 118, converts the audio data to an electrical signal, and transmits the electrical signal to the speaker 111. The speaker 111 converts the electrical signal to human-audible sound waves. The audio circuitry 110 also receives electrical signals converted by the microphone 113 from sound waves. The audio circuitry 110 converts the electrical signal to audio data and transmits the audio data to the peripherals interface 118 for processing. Audio data may be retrieved from and/or transmitted to memory 102 and/or the RF circuitry 108 by the peripherals interface 118. In some embodiments, the audio circuitry 110 also includes a headset jack (e.g. 212, Figure 2). The headset jack provides an interface between the audio circuitry 110 and removable audio input/output peripherals, such as output-only headphones or a headset with both output (e.g., a headphone for one or both ears) and input (e.g., a microphone).

The I/O subsystem 106 couples input/output peripherals on the device 100, such as the touch screen 112 and other input/control devices 116, to the peripherals interface 118. The I/O subsystem 106 may include a display controller 156 and one or more input controllers 160 for other input or control devices. The one or more input controllers 160 receive/send electrical signals from/to other input or control devices 116. The other input/control devices 116 may include physical buttons (e.g., push buttons, rocker buttons, etc.), dials, slider switches, joysticks, click wheels, and so forth. In some alternate embodiments, input controller(s) 160 may be coupled to any (or none) of the following: a keyboard, infrared port, USB port, and a pointer device such as a mouse. The one or more buttons (e.g., 208, Figure 2) may include an up/down button for volume control of the speaker 111 and/or the microphone 113. The one or more buttons may include a push button (e.g., 206, Figure 2). A quick press of the push button may disengage a lock of the touch screen 112 or begin a process that uses gestures on the touch screen to unlock the device, as described in U.S. Patent Application 11/322,549, "Unlocking a Device by Performing Gestures on an Unlock Image," filed December 23, 2005. A longer press of the push button (e.g., 206) may turn power to the device 100 on or off. The user may be able to customize a functionality of one or more of the buttons. The touch screen 112 is used to implement virtual or soft buttons and one or more soft keyboards.

The touch-sensitive touch screen 112 provides an input interface and an output interface between the device and a user. The display controller 156 receives and/or sends electrical signals from/to the touch screen 112. The touch screen 112 displays visual output to the user. The visual output may include graphics, text, icons, video, and any combination thereof (collectively termed "graphics"). In some embodiments, some or all of the visual output may correspond to user-interface objects.

A touch screen 112 has a touch-sensitive surface, sensor or set of sensors that accepts input from the user based on haptic and/or tactile contact. The touch screen 112 and the display controller 156 (along with any associated modules and/or sets of instructions in memory 102) detect contact (and any movement or breaking of the contact) on the touch screen 112 and converts the detected contact into interaction with user-interface objects (e.g., one or more soft keys, icons, web pages or images) that are displayed on the touch screen. In an exemplary embodiment, a point of contact between a touch screen 112 and the user corresponds to a finger of the user.

The touch screen 112 may use LCD (liquid crystal display) technology, or LPD (light emitting polymer display) technology, although other display technologies may be used in other embodiments. The touch screen 112 and the display controller 156 may detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with a touch screen 112. In an exemplary embodiment, projected mutual capacitance sensing technology is used, such as that found in the iPhone® and iPod Touch® from Apple Inc. of Cupertino, California.

A touch-sensitive display in some embodiments of the touch screen 112 may be analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1. However, a touch screen 112 displays visual output from the portable device 100, whereas touch sensitive touchpads do not provide visual output.

A touch-sensitive display in some embodiments of the touch screen 112 may be as described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006.

The touch screen 112 may have a resolution in excess of 100 dpi. In an exemplary embodiment, the touch screen has a resolution of approximately 160 dpi. The user may make contact with the touch screen 112 using any suitable object or appendage, such as a stylus, a finger, and so forth. In some embodiments, the user interface is designed to work primarily with finger-based contacts and gestures, which are much less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, the device 100 may include a touchpad (not shown) for activating or deactivating particular functions. In some embodiments, the touchpad is a touch-sensitive area of the device that, unlike the touch screen, does not display visual output. The touchpad may be a touch-sensitive surface that is separate from the touch screen 112 or an extension of the touch-sensitive surface formed by the touch screen.

In some embodiments, the device 100 may include a physical or virtual click wheel as an input control device 116. A user may navigate among and interact with one or more graphical objects (e.g., icons) displayed in the touch screen 112 by rotating the click wheel or by moving a point of contact with the click wheel (e.g., where the amount of movement of the point of contact is measured by its angular displacement with respect to a center point of the click wheel). The click wheel may also be used to select one or more of the displayed icons. For example, the user may press down on at least a portion of the click wheel or an associated button. User commands and navigation commands provided by the user via the click wheel may be processed by an input controller 160 as well as one or more of the modules and/or sets of instructions in memory 102. For a virtual click wheel, the click wheel and click wheel controller may be part of the touch screen 112 and the display controller 156, respectively. For a virtual click wheel, the click wheel may be either an opaque or semitransparent object that appears and disappears on the touch screen display in response to user interaction with the device. In some embodiments, a virtual click wheel is displayed on the touch screen of a portable multifunction device and operated by user contact with the touch screen.

The device 100 also includes a power system 162 for powering the various components. The power system 162 may include a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

The device 100 may also include one or more optical sensors 164. Figures 1A and 1B show an optical sensor coupled to an optical sensor controller 158 in I/O subsystem 106. The optical sensor 164 may include charge-coupled device (CCD) or complementary metal-oxide semiconductor (CMOS) phototransistors. The optical sensor 164 receives light from the environment, projected through one or more lens, and converts the light to data representing an image. In conjunction with an imaging module 143 (also called a camera module), the optical sensor 164 may capture still images or video. In some embodiments, an optical sensor is located on the back of the device 100, opposite the touch screen display 112 on the front of the device, so that the touch screen display may be used as a viewfinder for still and/or video image acquisition. In some embodiments, an optical sensor is located on the front of the device so that the user's image may be obtained for videoconferencing while the user views the other video conference participants on the touch screen display. In some embodiments, the position of the optical sensor 164 can be changed by the user (e.g., by rotating the lens and the sensor in the device housing) so that a single optical sensor 164 may be used along with the touch screen display for both video conferencing and still and/or video image acquisition.

The device 100 may also include one or more proximity sensors 166. Figures 1A and 1B show a proximity sensor 166 coupled to the peripherals interface 118. Alternately, the proximity sensor 166 may be coupled to an input controller 160 in the I/O subsystem 106. The proximity sensor 166 may perform as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals." In some embodiments, the proximity sensor turns off and disables the touch screen 112 when the multifunction device is placed near the user's ear (e.g., when the user is making a phone call).

The device 100 may also include one or more accelerometers 168. Figures 1A and 1B show an accelerometer 168 coupled to the peripherals interface 118. Alternately, the accelerometer 168 may be coupled to an input controller 160 in the I/O subsystem 106. The accelerometer 168 may perform as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer." herein in their entirety. In some embodiments, information is displayed on the touch screen display in a portrait view or a landscape view based on an analysis of data received from the one or more accelerometers.

In some embodiments, the software components stored in memory 102 may include an operating system 126, a communication module (or set of instructions) 128, a contact/motion module (or set of instructions) 130, a graphics module (or set of instructions) 132, a text input module (or set of instructions) 134, a Global Positioning System (GPS) module (or set of instructions) 135, and applications (or set of instructions) 136.

The operating system 126 (e.g., Darwin, RTXC, LINUX, UNIX, OS X, WINDOWS, or an embedded operating system such as VxWorks) includes various software components and/or drivers for controlling and managing general system tasks (e.g., memory management, storage device control, power management, etc.) and facilitates communication between various hardware and software components.

The communication module 128 facilitates communication with other devices over one or more external ports 124 and also includes various software components for handling data received by the RF circuitry 108 and/or the external port 124. The external port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with the 30-pin connector used on iPod (trademark of Apple Inc.) devices.

The contact/motion module 130 may detect contact with the touch screen 112 (in conjunction with the display controller 156) and other touch sensitive devices (e.g., a touchpad or physical click wheel). The contact/motion module 130 includes various software components for performing various operations related to detection of contact, such as determining if contact has occurred (e.g., detecting a finger-down event), determining if there is movement of the contact and tracking the movement across the touch-sensitive surface (e.g., detecting one or more finger-dragging events), and determining if the contact has ceased (e.g., detecting a finger-up event or a break in contact). The contact/motion module 130 receives contact data from the touch-sensitive surface. Determining movement of the point of contact, which is represented by a series of contact data, may include determining speed (magnitude), velocity (magnitude and direction), and/or an acceleration (a change in magnitude and/or direction) of the point of contact. These operations may be applied to single contacts (e.g., one finger contacts) or to multiple simultaneous contacts (e.g., "multitouch"/multiple finger contacts). In some embodiments, the contact/motion module 130 and the display controller 156 detects contact on a touchpad. In some embodiments, the contact/motion module 130 and the controller 160 detects contact on a click wheel.

The contact/motion module 130 may detect a gesture input by a user. Different gestures on the touch-sensitive surface have different contact patterns. Thus, a gesture may be detected by detecting a particular contact pattern. For example, detecting a finger tap gesture includes detecting a finger-down event followed by detecting a finger-up event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up event.

The graphics module 132 includes various known software components for rendering and displaying graphics on the touch screen 112 or other display, including components for changing the intensity of graphics that are displayed. As used herein, the term "graphics" includes any object that can be displayed to a user, including without limitation text, web pages, icons (such as user-interface objects including soft keys), digital images, videos, animations and the like.

In some embodiments, the graphics module 132 stores data representing graphics to be used. Each graphic may be assigned a corresponding code. The graphics module 132 receives, from applications etc., one or more codes specifying graphics to be displayed along with, if necessary, coordinate data and other graphic property data, and then generates screen image data to output to display controller 156.

The text input module 134, which may be a component of graphics module 132, provides soft keyboards for entering text in various applications (e.g., contacts 137, e-mail 140, IM 141, browser 147, and any other application that needs text input).

The GPS module 135 determines the location of the device and provides this information for use in various applications (e.g., to telephone 138 for use in location-based dialing, to camera 143 as picture/video metadata, and to applications that provide location-based services such as weather widgets, local yellow page widgets, and map/navigation widgets).

The applications 136 may include the following modules (or sets of instructions), or a subset or superset thereof:
- a contacts module 137 (sometimes called an address book or contact list);
- a telephone module 138;
- a video conferencing module 139;
- an e-mail client module 140;
- an instant messaging (IM) module 141;
- a workout support module 142;
- a camera module 143 for still and/or video images;
- an image management module 144;
- a video player module 145;
- a music player module 146;
- a browser module 147;
- a calendar module 148;
- widget modules 149, which may include weather widget 149-1, stocks widget 149-2, calculator widget 149-3, alarm clock widget 149-4, dictionary widget 149-5, and other widgets obtained by the user, as well as user-created widgets 149-6;
- widget creator module 150 for making user-created widgets 149-6;
- search module 151;
- video and music player module 152, which merges video player module 145 and music player module 146;
- notes module 153;
- map module 154; and/or
- online video module 155.

Examples of other applications 136 that may be stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact module 130, graphics module 132, and text input module 134, the contacts module 137 may be used to manage an address book or contact list, including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference 139, e-mail 140, or IM 141; and so forth.

In conjunction with RF circuitry 108, audio circuitry 110, speaker 111, microphone 113, touch screen 112, display controller 156, contact module 130, graphics module 132, and text input module 134, the telephone module 138 may be used to enter a sequence of characters corresponding to a telephone number, access one or more telephone numbers in the address book 137, modify a telephone number that has been entered, dial a respective telephone number, conduct a conversation and disconnect or hang up when the conversation is completed. As noted above, the wireless communication may use any of a plurality of communications standards, protocols and technologies.

In conjunction with RF circuitry 108, audio circuitry 110, speaker 111, microphone 113, touch screen 112, display controller 156, optical sensor 164, optical sensor controller 158, contact module 130, graphics module 132, text input module 134, contact list 137, and telephone module 138, the videoconferencing module 139 may be used to initiate, conduct, and terminate a video conference between a user and one or more other participants.

In conjunction with RF circuitry 108, touch screen 112, display controller 156, contact module 130, graphics module 132, and text input module 134, the e-mail client module 140 may be used to create, send, receive, and manage e-mail. In conjunction with image management module 144, the e-mail module 140 makes it very easy to create and send e-mails with still or video images taken with camera module 143.

In conjunction with RF circuitry 108, touch screen 112, display controller 156, contact module 130, graphics module 132, and text input module 134, the instant messaging module 141 may be used to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages and to view received instant messages. In some embodiments, transmitted and/or received instant messages may include graphics, photos, audio files, video files and/or other attachments as are supported in a MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact module 130, graphics module 132, text input module 134, GPS module 135, map module 154, and music player module 146, the workout support module 142 may be used to create workouts (e.g., with time, distance, and/or calorie burning goals); communicate with workout sensors (sports devices); receive workout sensor data; calibrate sensors used to monitor a workout; select and play music for a workout; and display, store and transmit workout data.

In conjunction with touch screen 112, display controller 156, optical sensor(s) 164, optical sensor controller 158, contact module 130, graphics module 132, and image management module 144, the camera module 143 may be used to capture still images or video (including a video stream) and store them into memory 102, modify characteristics of a still image or video, or delete a still image or video from memory 102.

In conjunction with touch screen 112, display controller 156, contact module 130, graphics module 132, text input module 134, and camera module 143, the image management module 144 may be used to arrange, modify (e.g., edit), or otherwise manipulate, label, delete, present (e.g., in a digital slide show or album), and store still and/or video images.

In conjunction with touch screen 112, display controller 156, contact module 130, graphics module 132, audio circuitry 110, and speaker 111, the video player module 145 may be used to display, present or otherwise play back videos (e.g., on the touch screen or on an external, connected display via external port 124).

In conjunction with touch screen 112, display system controller 156, contact module 130, graphics module 132, audio circuitry 110, speaker 111, RF circuitry 108, and browser module 147, the music player module 146 allows the user to download and play back recorded music and other sound files stored in one or more file formats, such as MP3 or AAC files. In some embodiments, the device 100 may include the functionality of an MP3 player, such as an iPod (trademark of Apple Inc.).

In conjunction with RF circuitry 108, touch screen 112, display system controller 156, contact module 130, graphics module 132, and text input module 134, the browser module 147 may be used to browse the Internet, including searching, linking to, receiving, and displaying web pages or portions thereof, as well as attachments and other files linked to web pages.

In conjunction with RF circuitry 108, touch screen 112, display system controller 156, contact module 130, graphics module 132, text input module 134, e-mail module 140, and browser module 147, the calendar module 148 may be used to create, display, modify, and store calendars and data associated with calendars (e.g., calendar entries, to do lists, etc.).

In conjunction with RF circuitry 108, touch screen 112, display system controller 156, contact module 130, graphics module 132, text input module 134, and browser module 147, the widget modules 149 are mini-applications that may be downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display system controller 156, contact module 130, graphics module 132, text input module 134, and browser module 147, the widget creator module 150 may be used by a user to create widgets (e.g., turning a user-specified portion of a web page into a widget).

In conjunction with touch screen 112, display system controller 156, contact module 130, graphics module 132, and text input module 134, the search module 151 may be used to search for text, music, sound, image, video, and/or other files in memory 102 that match one or more search criteria (e.g., one or more user-specified search terms).

In conjunction with touch screen 112, display controller 156, contact module 130, graphics module 132, and text input module 134, the notes module 153 may be used to create and manage notes, to do lists, and the like.

In conjunction with RF circuitry 108, touch screen 112, display system controller 156, contact module 130, graphics module 132, text input module 134, GPS module 135, and browser module 147, the map module 154 may be used to receive, display, modify, and store maps and data associated with maps (e.g., driving directions; data on stores and other points of interest at or near a particular location; and other location-based data).

In conjunction with touch screen 112, display system controller 156, contact module 130, graphics module 132, audio circuitry 110, speaker 111, RF circuitry 108, text input module 134, e-mail client module 140, and browser module 147, the online video module 155 allows the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007.

Each of the above identified modules and applications correspond to a set of executable instructions for performing one or more functions described above and the methods described in this application (e.g., the computer-implemented methods and other information processing methods described herein). These modules (i.e., sets of instructions) need not be implemented as separate software programs, procedures or modules, and thus various subsets of these modules may be combined or otherwise re-arranged in various embodiments. For example, video player module 145 may be combined with music player module 146 into a single module (e.g., video and music player module 152, Figure 1B). In some embodiments, memory 102 may store a subset of the modules and data structures identified above. Furthermore, memory 102 may store additional modules and data structures not described above.

In some embodiments, the device 100 is a device where operation of a predefined set of functions on the device is performed exclusively through a touch screen 112 and/or a touchpad. By using a touch screen and/or a touchpad as the primary input/control device for operation of the device 100, the number of physical input/control devices (such as push buttons, dials, and the like) on the device 100 may be reduced.

The predefined set of functions that may be performed exclusively through a touch screen and/or a touchpad include navigation between user interfaces. In some embodiments, the touchpad, when touched by the user, navigates the device 100 to a main, home, or root menu from any user interface that may be displayed on the device 100. In such embodiments, the touchpad may be referred to as a "menu button." In some other embodiments, the menu button may be a physical push button or other physical input/control device instead of a touchpad.

Figure 2 illustrates a portable multifunction device 100 having a touch screen 112 in accordance with some embodiments. The touch screen may display one or more graphics within user interface (UI) 200. In this embodiment, as well as others described below, a user may select one or more of the graphics by making contact or touching the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the contact may include a gesture, such as one or more taps, one or more swipes (from left to right, right to left, upward and/or downward) and/or a rolling of a finger (from right to left, left to right, upward and/or downward) that has made contact with the device 100. In some embodiments, inadvertent contact with a graphic may not select the graphic. For example, a swipe gesture that sweeps over an application icon may not select the corresponding application when the gesture corresponding to selection is a tap.

The device 100 may also include one or more physical buttons, such as "home" or menu button 204. As described previously, the menu button 204 may be used to navigate to any application 136 in a set of applications that may be executed on the device 100. Alternatively, in some embodiments, the menu button is implemented as a soft key in a GUI in touch screen 112.

In one embodiment, the device 100 includes a touch screen 112, a menu button 204, a push button 206 for powering the device on/off and locking the device, volume adjustment button(s) 208, a Subscriber Identity Module (SIM) card slot 210, a head set jack 212, and a docking/charging external port 124. The push button 206 may be used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, the device 100 also may accept verbal input for activation or deactivation of some functions through the microphone 113.

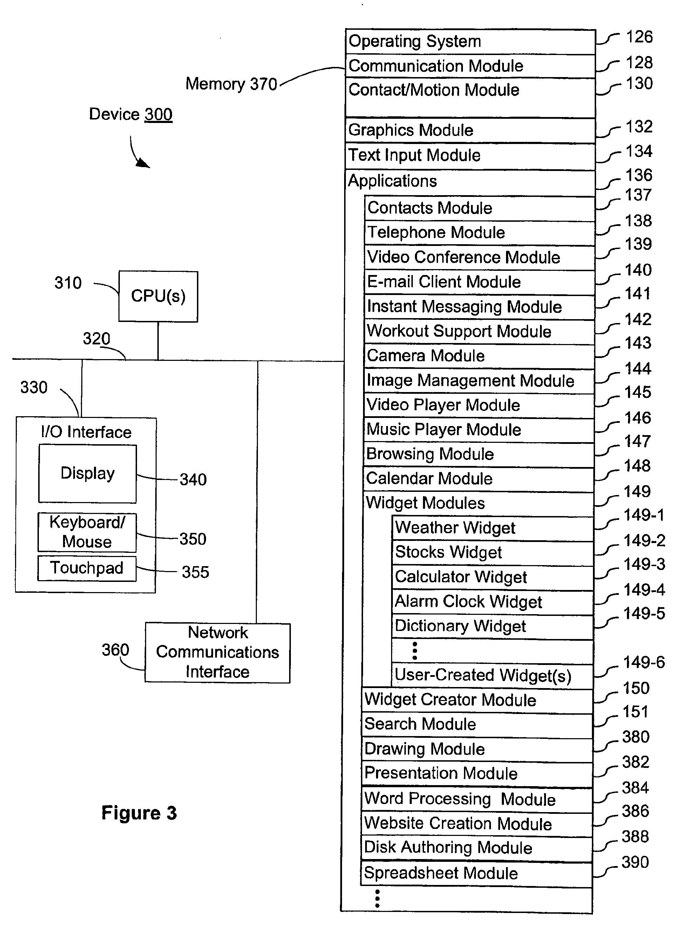

Figure 3 is a block diagram of an exemplary multifunction device with a display and a touch-sensitive surface in accordance with some embodiments. Device 300 need not be portable. In some embodiments, the device 300 is a laptop computer, a desktop computer, a tablet computer, a multimedia player device, a navigation device, an educational device (such as a child's learning toy), a gaming system, or a control device (e.g., a home or industrial controller). The device 300 typically includes one or more processing units (CPU's) 310, one or more network or other communications interfaces 360, memory 370, and one or more communication buses 320 for interconnecting these components. The communication buses 320 may include circuitry (sometimes called a chipset) that interconnects and controls communications between system components. The device 300 includes an input/output (I/O) interface 330 comprising a display 340, which is typically a touch screen display. The I/O interface 330 also may include a keyboard and/or mouse (or other pointing device) 350 and a touchpad 355. Memory 370 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. Memory 370 may optionally include one or more storage devices remotely located from the CPU(s) 310. In some embodiments, memory 370 stores programs, modules, and data structures analogous to the programs, modules, and data structures stored in the memory 102 of portable multifunction device 100 (Figure 1), or a subset thereof. Furthermore, memory 370 may store additional programs, modules, and data structures not present in the memory 102 of portable multifunction device 100. For example, memory 370 of device 300 may store drawing module 380, presentation module 382, word processing module 384, website creation module 386, disk authoring module 388, and/or spreadsheet module 390, while memory 102 of portable multifunction device 100 (Figure 1) may not store these modules.

Each of the above identified elements in Figure 3 may be stored in one or more of the previously mentioned memory devices. Each of the above identified modules corresponds to a set of instructions for performing a function described above. The above identified modules or programs (i.e., sets of instructions) need not be implemented as separate software programs, procedures or modules, and thus various subsets of these modules may be combined or otherwise re-arranged in various embodiments. In some embodiments, memory 370 may store a subset of the modules and data structures identified above. Furthermore, memory 370 may store additional modules and data structures not described above.

Attention is now directed towards embodiments of user interfaces ("UI") that may be implemented on a portable multifunction device 100.

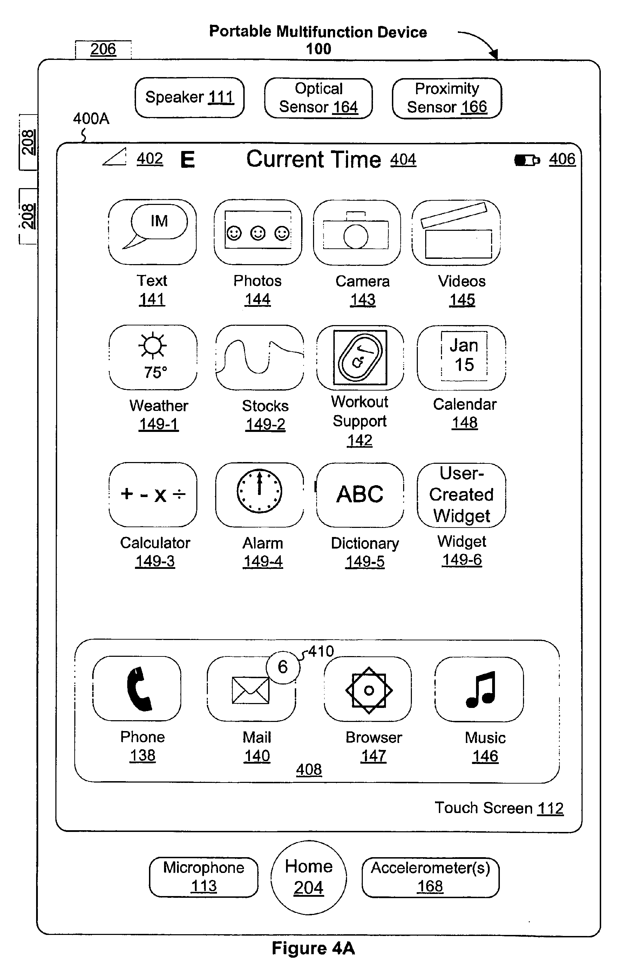

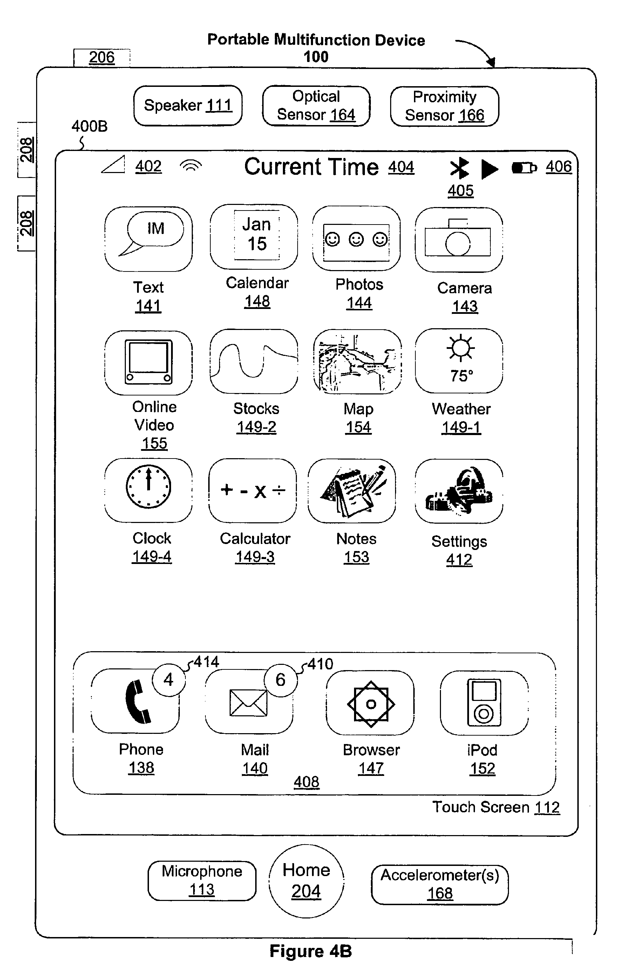

Figures 4A and 4B illustrate exemplary user interfaces for a menu of applications on a portable multifunction device 100 in accordance with some embodiments. Similar user interfaces may be implemented on device 300. In some embodiments, user interface 400A includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ○ Phone 138, which may include an indicator 414 of the number of missed calls or voicemail messages;
   ○ E-mail client 140, which may include an indicator 410 of the number of unread e-mails;
   ○ Browser 147; and
   ○ Music player 146; and
- Icons for other applications, such as:
   ○ IM 141;
   ○ Image management 144;
   ○ Camera 143;
   ○ Video player 145;
   ○ Weather 149-1;
   ○ Stocks 149-2;
   ○ Workout support 142;
   ○ Calendar 148;
   ○ Calculator 149-3;
   ○ Alarm clock 149-4;
   ○ Dictionary 149-5; and
   ○ User-created widget 149-6.

In some embodiments, user interface 400B includes the following elements, or a subset or superset thereof:
- 402, 404, 405, 406, 141, 148, 144, 143, 149-3, 149-2, 149-1, 149-4, 410, 414, 138, 140, and 147, as described above;
- Map 154;
- Notes 153;
- Settings 412, which provides access to settings for the device 100 and its various applications 136, as described further below;
- Video and music player module 152, also referred to as iPod (trademark of Apple Inc.) module 152; and
- Online video module 155, also referred to as YouTube (trademark of Google Inc.) module 155.

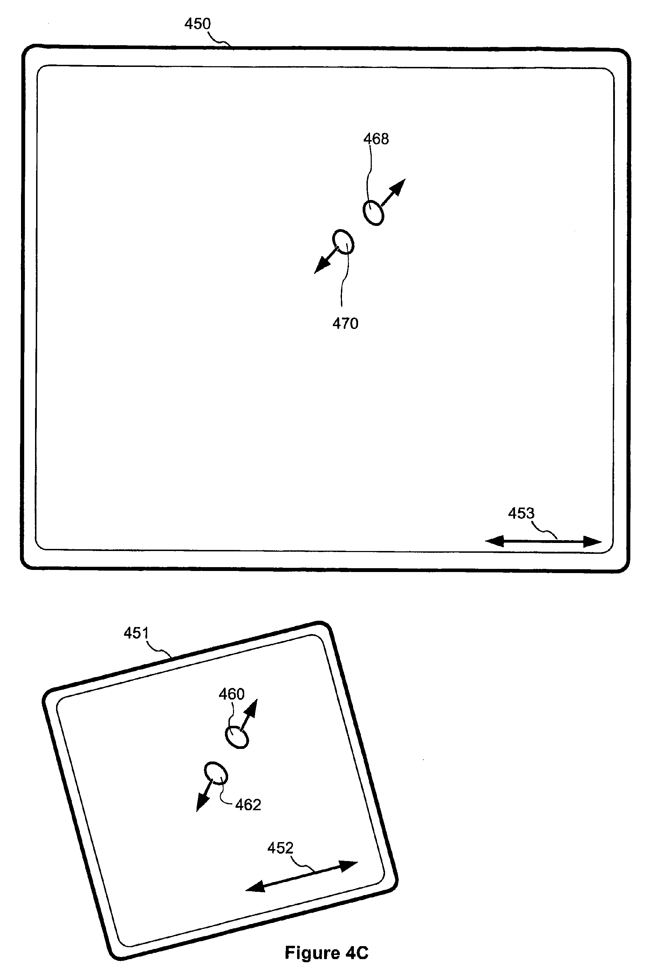

Figure 4C illustrates an exemplary user interface on a device (e.g., device 300, Figure 3) with a touch-sensitive surface 451 (e.g., a tablet or touchpad 355, Figure 3) that is separate from the display 450 (e.g., touch screen display 112). Although many of the examples which follow will be given with reference to inputs on a touch screen display 112 (where the touch sensitive surface and the display are combined), in some embodiments, the device detects inputs on a touch-sensitive surface that is separate from the display, as shown in Figure 4C. In some embodiments the touch sensitive surface (e.g., 451 in Figure 4C) has a primary axis (e.g., 452 in Figure 4C) that corresponds to a primary axis (e.g., 453 in Figure 4C) on the display (e.g., 450). In accordance with these embodiments, the device detects contacts (e.g., 460 and 462 in Figure 4C) with the touch-sensitive surface 451 at locations that correspond to respective locations on the display (e.g., in Figure 4C 460 corresponds to 468 and 462 corresponds to 470). In this way, user inputs (e.g., contacts 460 and 462) detected by the device on the touch-sensitive surface (e.g., 451 in Figure 4C) are used by the device to manipulate the user interface on the display (e.g., 450 in Figure 4C) of the multifunction device when the touch-sensitive surface is separate from the display. It should be understood that similar methods may be used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse based input or stylus input). For example, a swipe gesture may be replaced with a mouse click (e.g., instead of a contact) followed by movement of the cursor along the path of the swipe (e.g., instead of movement of the contact). As another example, a tap gesture may be replaced with a mouse click while the cursor is located over the location of the tap gesture (e.g., instead of detection of the contact followed by ceasing to detect the contact). Similarly, when multiple user inputs are simultaneously detected, it should be understood that multiple computer mice may be used simultaneously, or a mouse and finger contacts may be used simultaneously.

Attention is now directed towards embodiments of user interfaces ("UI") and associated processes that may be implemented on a multifunction device with a display and a touch-sensitive surface, such as device 300 or portable multifunction device 100.

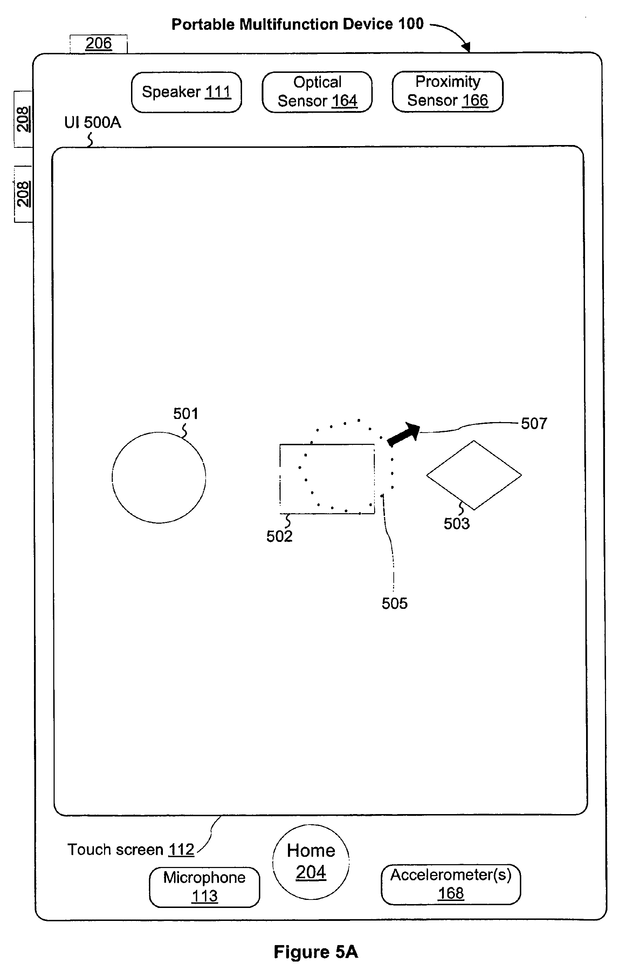

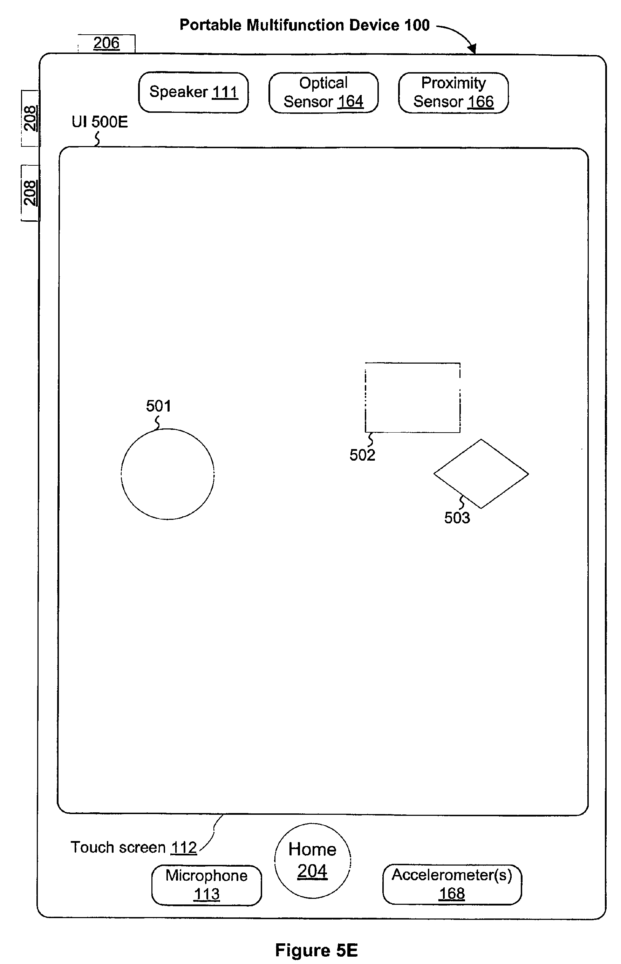

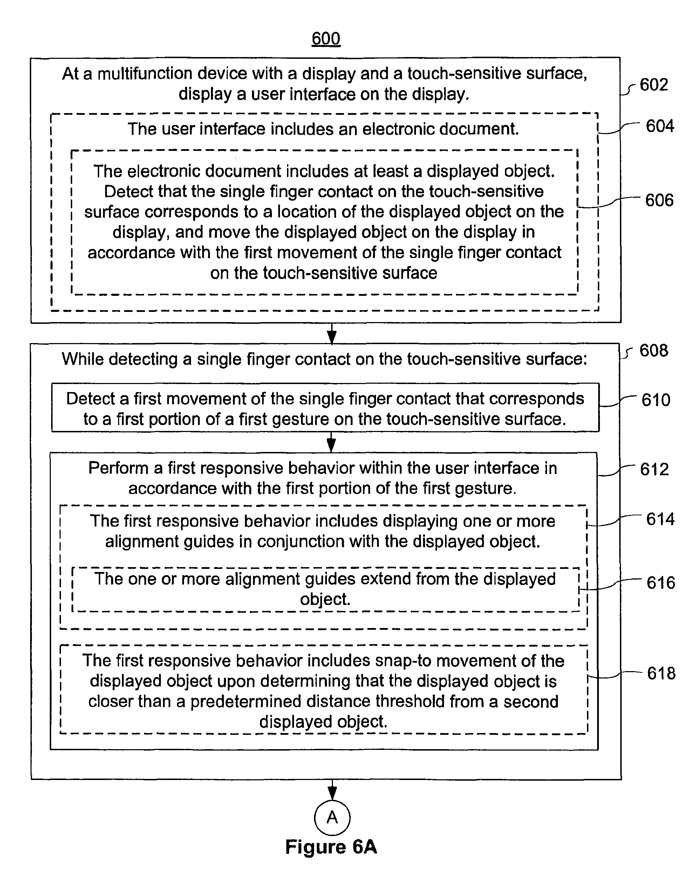

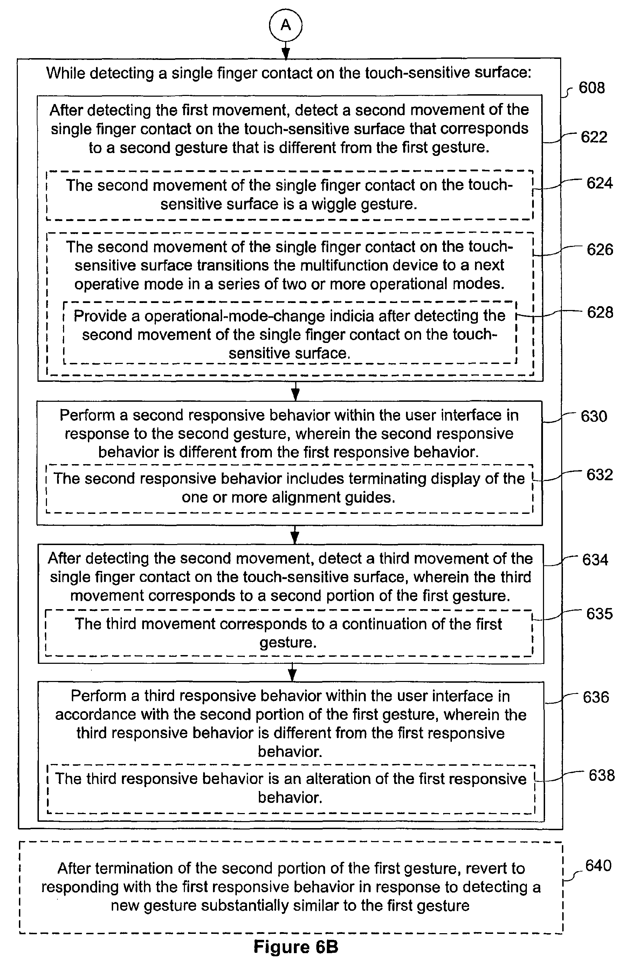

Figures 5A-5S illustrate exemplary user interfaces using gesture modification motions in accordance with some embodiments. The user interfaces in these figures are used to illustrate the processes described below, including the processes depicted in Figures 6A-8B.

Mid-drag gestures, microgestures within gestures, and other gesture modification motions performed contiguously within an overall gesture, i.e., without losing contact with the touch-sensitive input surface during the gesture, provide intuitive ways to interact with a user interface for varying purposes, such as modifying user interface behaviors, changing optionally displayed items, etc. In this disclosure, the use of the terms "mid-drag gesture" and "microgesture" refers to forms of gesture modification motions performed contiguously within an overall gesture, and may be used interchangeably. In some instances in this disclosure, the term "gesture" may also be used to refer to a mid-drag gesture or microgesture.

The use of mid-drag gestures reduces the cognitive burden on a user, thereby creating a more efficient human-machine interface. For battery-operated computing devices, enabling a user to use mid-drag gestures allows for faster and more efficient use of user interfaces, thereby conserving power and increasing the time between battery charges.

Various mid-drag gestures, microgestures within gestures, and other gesture modification motions performed contiguously within an overall gesture, may be used for any suitable purpose, including without limitation, turning on or off alignment guides, snapping to varying proportional display modes, changing anchor points in a document, using a microgesture as a substitute for a function key on a keyboard, snap-to-grid display mode, adding arrowheads or other features to displayed objects, snapping to various rotation angles, adding control points to curves, while dragging a figure over an electronic canvas, inserting one or more displayed objects at the current contact point in response to detecting one or more microgestures, transitioning a device to a next operational mode in a series of two or more operational modes, (e.g., transitioning through text-to-speech and displayed output modes, setting ring tones, setting auto-answer of a mobile phone, changing graphics modes etc.), controlling games, (e.g., shifting gears up or down with a micro-gesture while steering with a two-finger rotational gesture, transitioning through a list of weapons), zoom control while shifting through images (e.g., switching image modes between various medical imaging modalities like MRI, fluoroscopy, CT scans, PET scans, etc., without interrupting your zoom-level).

Though the examples illustrated in Figs. 5A-5S illustrate use of mid-drag gestures and microgestures for turning on or off alignment guides, the methods and techniques discussed herein may be applied to the various examples listed above, or for any suitable purpose.

UI 500A (Fig. 5A) depicts an exemplar user interface UI 500A displayed on multifunction device 100. In this example, the user interface includes an electronic document with user interface elements that are displayed, moveable objects, i.e., circle 501, rectangle 502, and diamond 503. Near a corner of rectangle 502, a user has made, and the device has detected, a single finger contact 505 on the touch screen 112.

UI 500A also depicts that device 100 detects a first movement 507 of the single finger contact 505 on the touch screen 112.

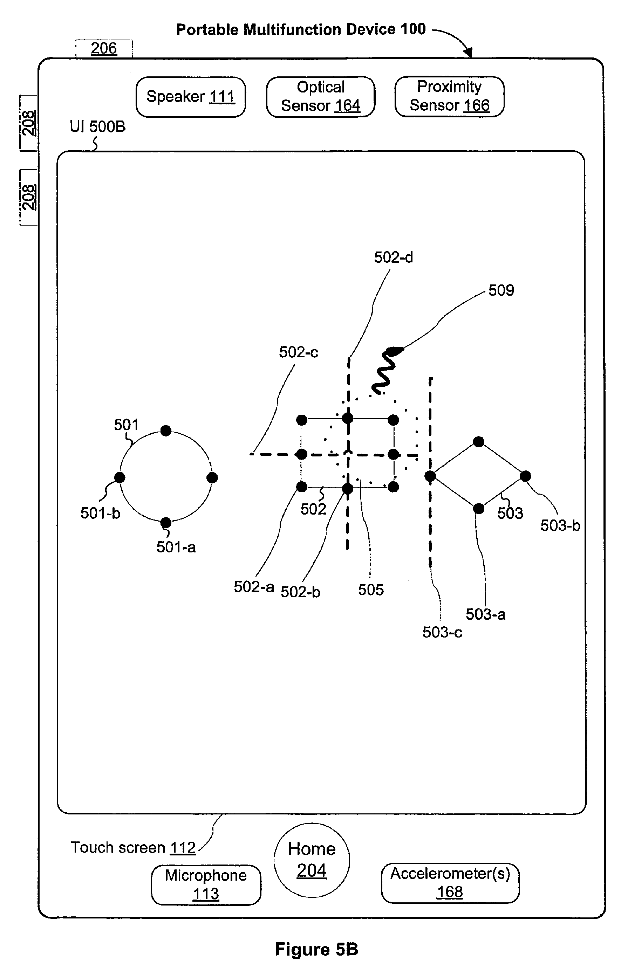

UI 500B (Fig. 5B) illustrates that, after detecting the first movement 507 in UI 500A, the device has performed a first responsive behavior. In this case, the first responsive behavior is to display alignments guides in conjunction with the displayed objects circle 501, rectangle 502, and diamond 503 (e.g., attachment handles 501-a and 501-b with respect to circle 501; attachment handles 502-a and 502-b, and extended alignment guides 502-c and 502-d with respect to rectangle 502; and attachment handles 503-a and 503-b, and extended alignment guide 503-c with respect to diamond 503).

UI 500B also depicts that after detecting the first movement 507, device 100 detects a second movement 509 of the single finger contact 505. Second movement 509 of the single finger contact 505 is different from the first movement 507. The second movement 509 is a wiggle gesture, while the first movement 507 is a drag gesture intended to move the object rectangle 502 within the electronic document.

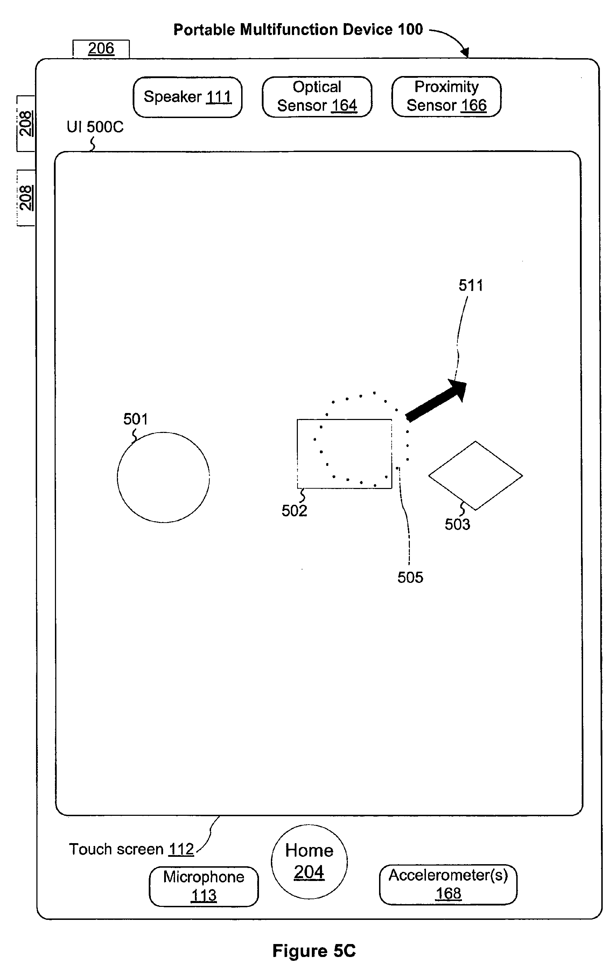

UI 500C (Fig. 5C) illustrates that, after detecting the second movement 509 of the single finger contact 505, the device performs a second responsive behavior within the user interface in response to the second gesture. Specifically, in this example, the alignments guides are no longer displayed. In UI 500B, however, the alignment guides were displayed as a first responsive behavior to the first movement 507 of the single finger contact 505.

This example depicts that the second movement 509 - the wiggle gesture - is a mid-drag gesture that lets a user "shake off" the alignment guides displayed in conjunction with the displayed objects, and therefore, modifies the first responsive behavior.

UI 500C also depicts that device 100 detects a third movement 511 of the single finger contact 505, where the third movement 511 corresponds to a second portion of the first gesture. In this example, third movement 511 corresponds to a continuation of the first gesture, where the user is moving rectangle 502 from one location to another within the electronic document.

UI 500C also illustrates that a third responsive behavior is performed within the user interface in accordance with the second portion of the first gesture, wherein the third responsive behavior is different from the first responsive behavior. Specifically, in this example, the first responsive behavior was to display alignments guides in conjunction with the displayed objects when moving an object, then after detecting the second gesture that "shook off" the alignment guides, the third responsive behavior that is different from the first responsive behavior is to show the displayed objects *without* alignments guides when moving an object.

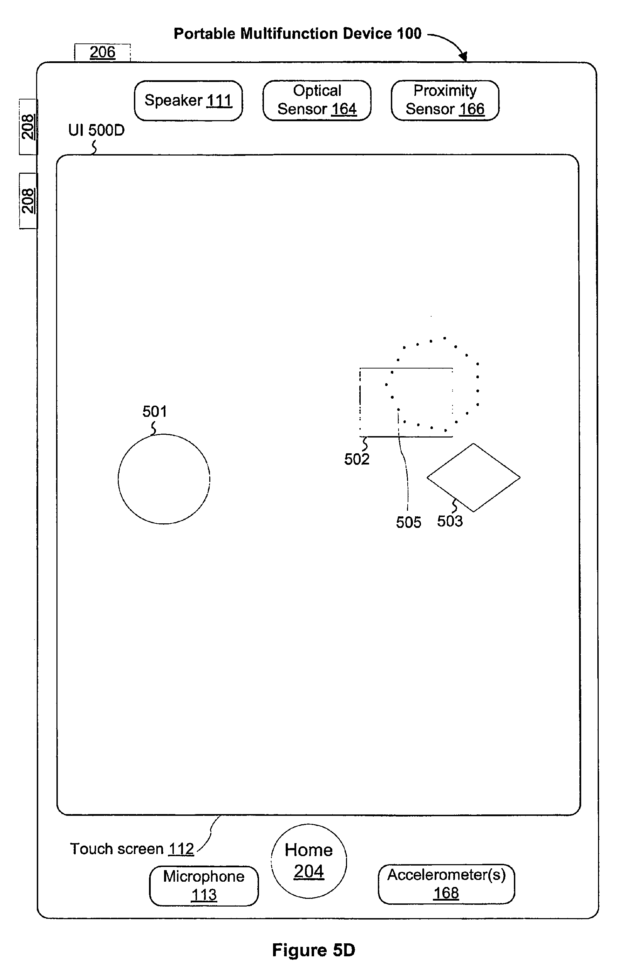

UI 500D-UI 500E (Figs. 5D-E) depict that rectangle 502 has been moved to a new position in accordance with the third movement 511 of the single finger contact 505, and, in UI 500E, single finger contact 505 has been removed from the touch screen 112.

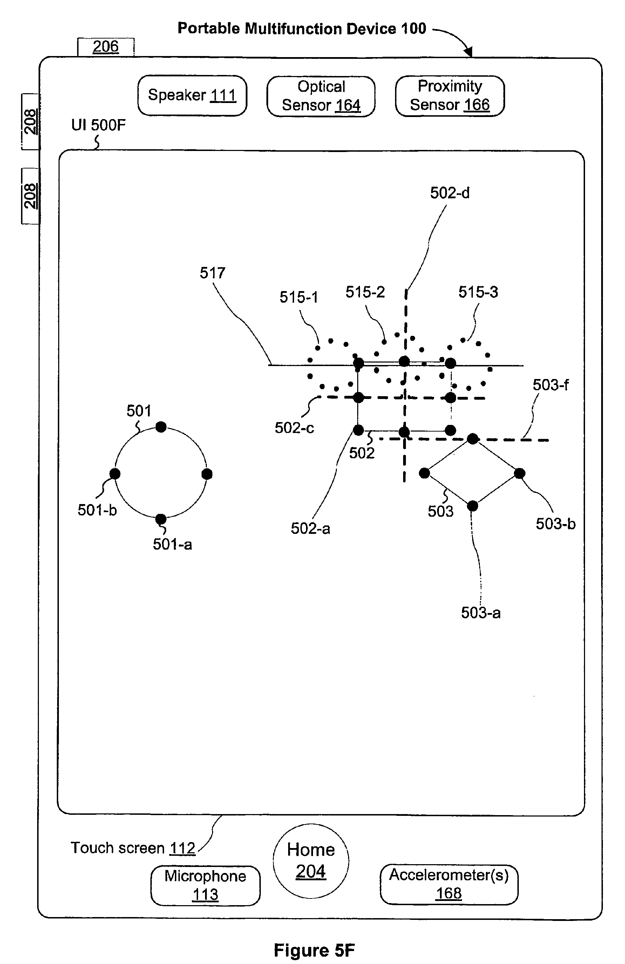

UI 500F (Fig. 5F) illustrates an exemplary variation of the mid-gesture modifications depicted in UI 500A-UI 500E. In UI 500F, three finger contacts, 515-1, 515-2, and 515-3 are detected on touch screen 112. The three finger contacts are substantially aligned on axis 517 (illustrated as a visible line in Figs. 5F-5H for purposes of clarity). In this example, specific detection of a first movement of the three finger contacts is omitted for brevity, though the display of alignment guides as a first responsive behavior is depicted, (e.g., attachment handles 501-a and 501-b with respect to circle 501; attachment handle 502-a and extended alignment guides 502-c and 502-d with respect to rectangle 502; and attachment handles 503-a and 503-b, and extended alignment guide 503-f with respect to diamond 503).

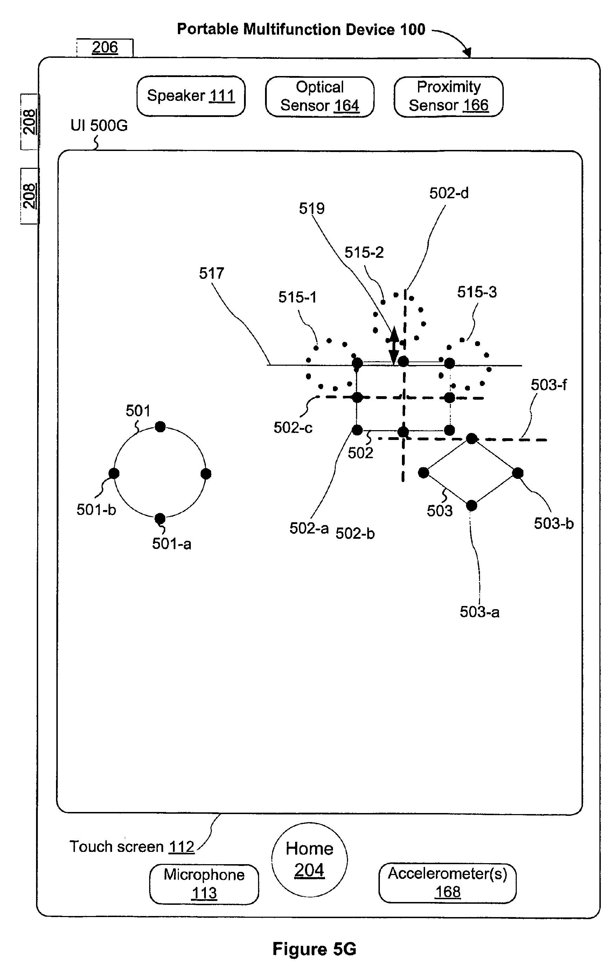

In UI 500G (Fig. 5G), the device detects a second gesture 519 where finger contact 515-2 has moved away from the axis 517, while the other two finger contacts 515-1 and 515-3 remain substantially aligned on the axis 517.

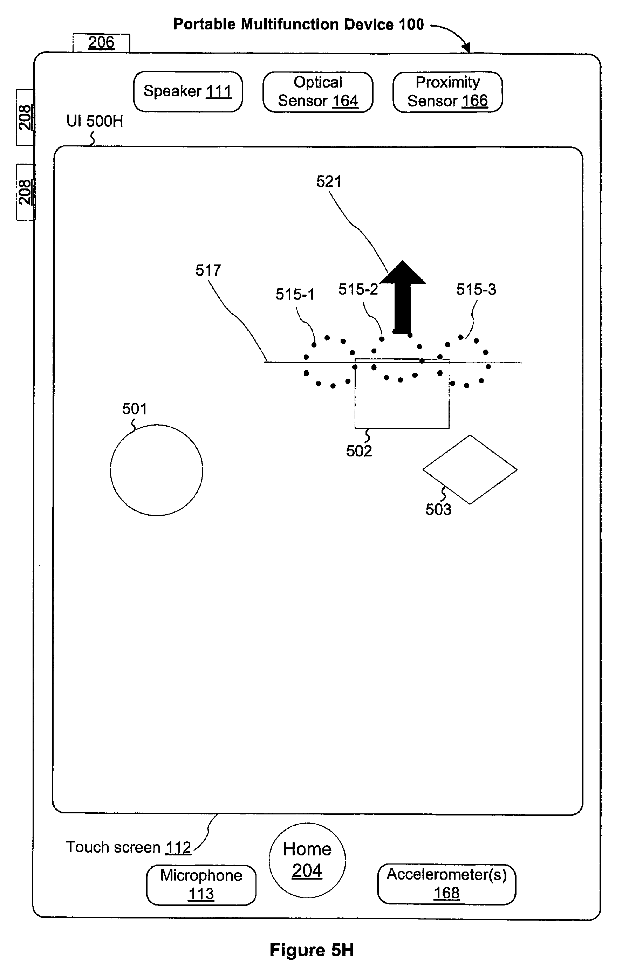

In UI 500H (Fig. 5H), after the device detects the second gesture 519 where finger contact 515-2 has moved away from the axis 517, a second behavior is performed within the user interface, namely, to stop displaying the alignment guides in conjunction with the displayed objects.

UI 500H also depicts that the device detects a third movement 521 of the three finger contacts, which in this example, corresponds to a second portion of the first gesture to move rectangle 502 within the electronic document (as noted above, the first portion of the first gesture was not depicted). In this example, the first responsive behavior was to display alignments guides in conjunction with the displayed objects when moving an object (UI 500F), then in response to detecting the second gesture where one finger contact moved away from the axis (movement 519), the alignment guides are no longer displayed.

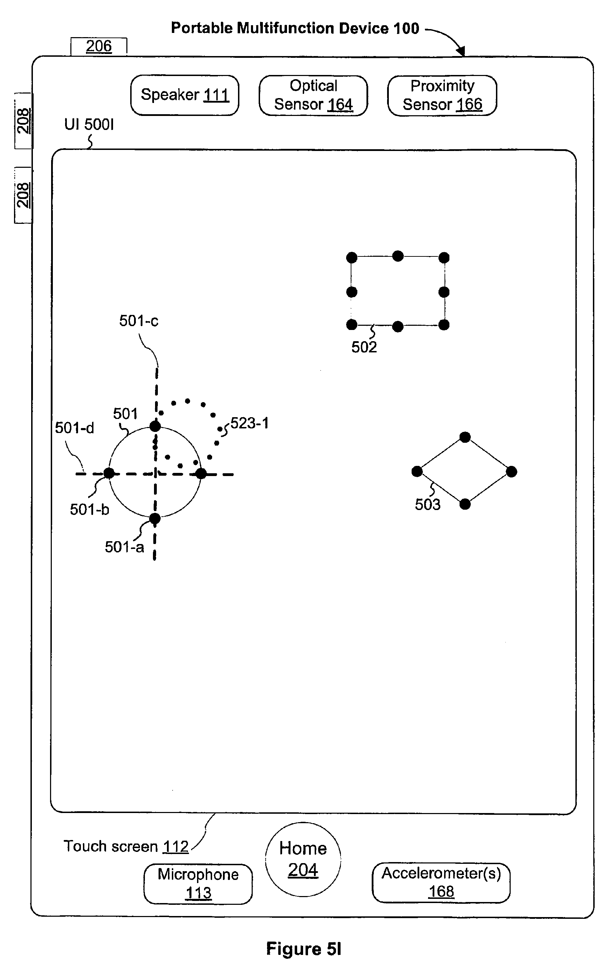

UI 5001 (Fig. 5I) illustrates that in response to the second gesture 519, rectangle 502 has been moved to a new position in the electronic document. Though not depicted in the figures for purposes of brevity, the alignment guides were not displayed while rectangle 502 was being moved in accordance with movement 521. Accordingly, the device performed a third responsive behavior in response to the third movement 521 of the three finger contacts (i.e., *not* displaying the alignment guides while moving an object), which was different than the first responsive behavior (i.e., displaying the alignment guides while moving an object).

UI 500I also depicts that after rectangle 502 was moved to the new position in the electronic document, the three finger contacts 515-1, 515-2, and 515-3 were removed from touch screen 112.

UI 500I also depicts that a first portion of a single finger gesture 523 has been detected on circle 501. In response, a first responsive behavior is performed within the user interface in accordance with the gesture 523 (i.e., displaying alignment guides in conjunction with the displayed moveable objects circle 501, rectangle 502, and diamond 503, including attachment handles 501-a and 501-b and extended alignment guides 501-c and 501-d with respect to circle 501).

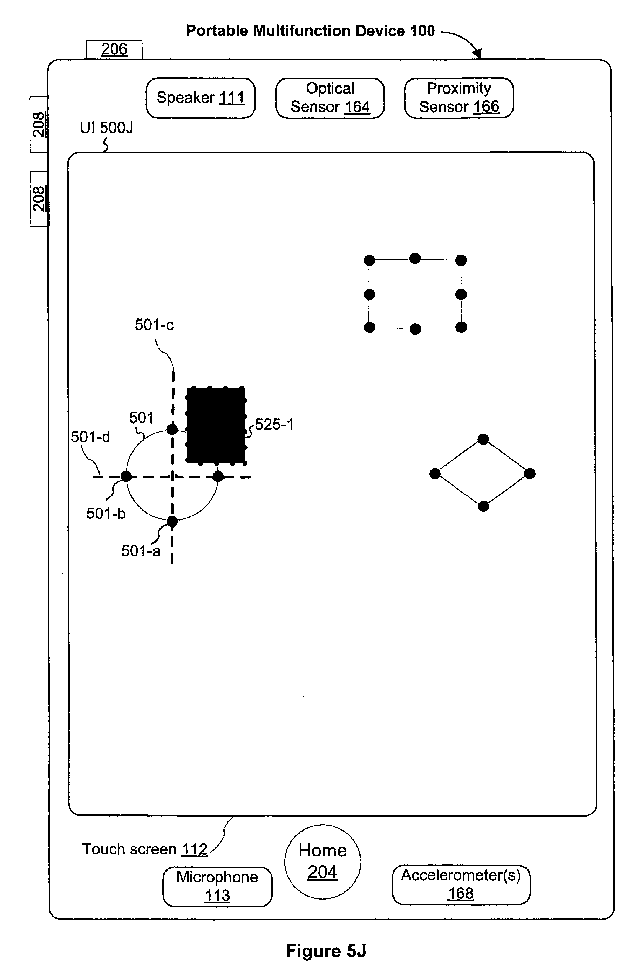

UI 500J (Fig. 5J) depicts that, after detecting the first portion of the single finger gesture, the device detects an increase in size 525-1 of the single finger contact on the touch screen 112. In this example, the increase in size of the single finger contact is from detecting enlargement of the size of the single finger contact from a finger roll of the finger corresponding to the single finger contact. In other words, the user rolled her finger down on to the touch screen 112 so that a knuckle segment of the finger corresponding to the single finger contact is on the touch screen 112.

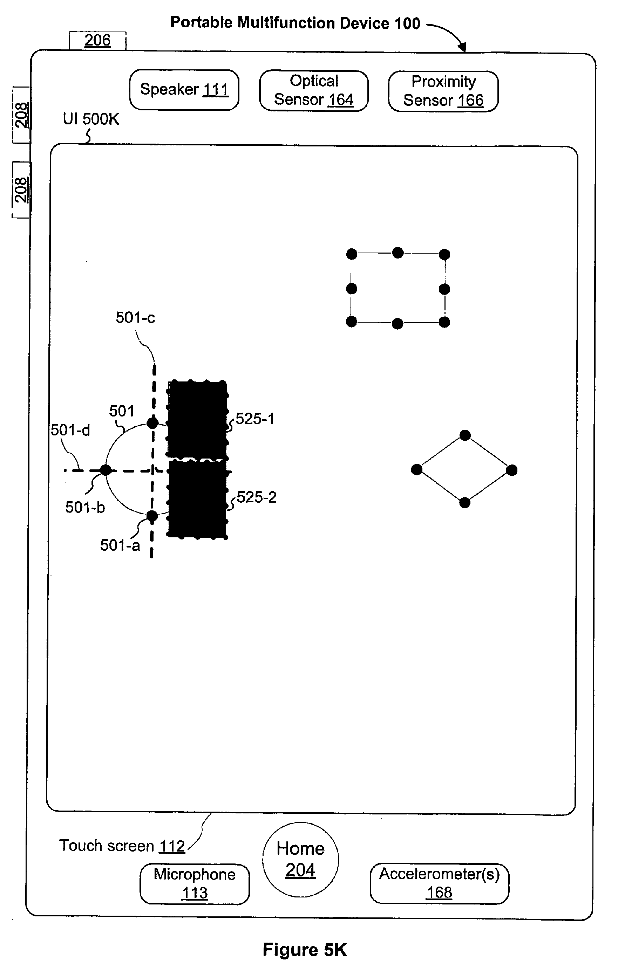

UI 500K (Fig. 5K) illustrates a further increase in size 525-2 of the single finger contact on the touch screen 112. In this example, the increase in size of the single finger contact is from detecting further enlargement of the size of the single finger contact from a finger roll of the finger corresponding to the single finger contact. In other words, the user rolled her finger down more so that two knuckle segments of the finger corresponding to the single finger contact are on the touch screen 112.

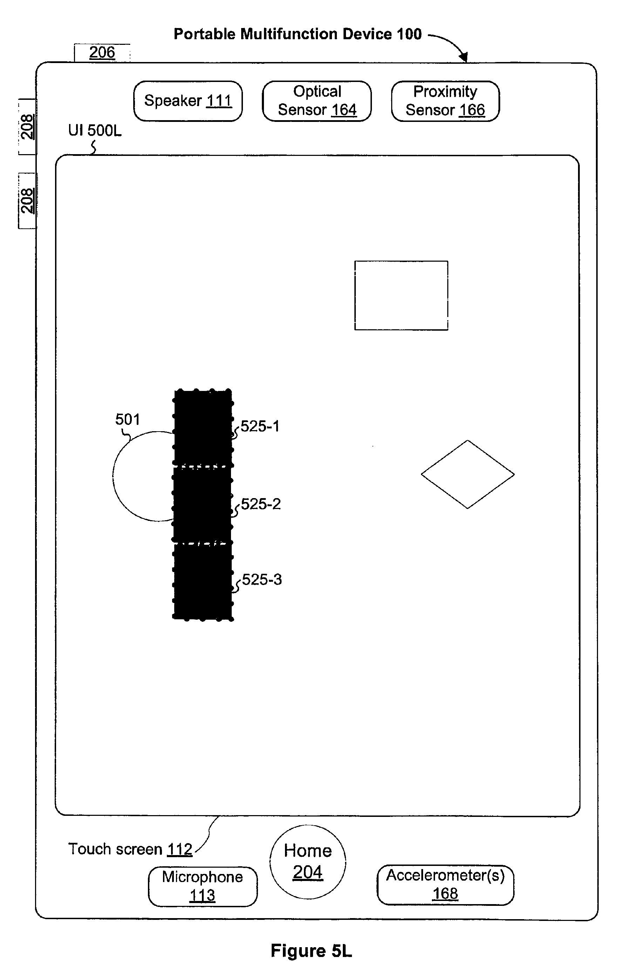

UI 500L (Fig. 5L) illustrates a further increase in size 525-3 of the single finger contact on the touch screen 112. In this example, the increase in size of the single finger contact is from detecting further enlargement of the size of the single finger contact from a finger roll of the finger corresponding to the single finger contact. In other words, the user rolled her finger down more so that three knuckle segments of the finger corresponding to the single finger contact are on the touch screen 112.

UI 500L also depicts that, in response to detecting the increases 525-1, 525-2, and 525-3 in size of the single finger contact on the touch screen 112, a second responsive behavior is performed within the user interface that is different from the first responsive behavior: namely, the alignment guides are no longer displayed.

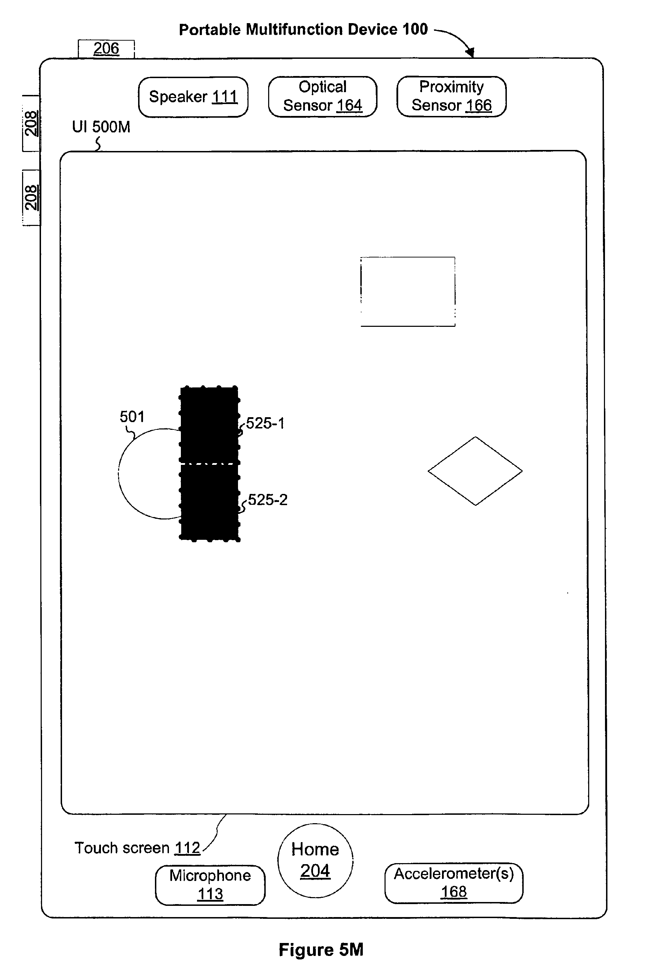

UI 500M-UI 5000 (Fig. 5M-5O) illustrate that the device detects a decrease in size of the finger contact on the touch screen to a size 523-2 substantially similar to the first size 523-1. In UI 500M, the size of the finger contact is decreased since 525-3 (Fig. 5L) is removed from the touch screen 112. In UI 500N, the size of the finger contact is decreased again since 525-2 (Fig. 5M) is removed from the touch screen 112. Finally, in UI 5000, the size of the finger contact 523-2 is a size substantially similar to the first size 523-1 (Fig. 5I) because 525-1 was reduced to finger contact 523-2.

UI 5000 also illustrates a finger gesture 527 that corresponds to a second portion of the single finger gesture 523-2 on the touch screen 112, which is performed with a third responsive behavior different from the first behavior. As noted above, the first responsive behavior was to display the moveable objects with alignment guides. But in response to detecting the increase in size of the single finger contact, a second behavior was performed, i.e., terminating display of the alignment guides. Gesture 527, the second portion of the single finger gesture, is, in this example, a drag gesture to move circle 501 to another location within the electronic document. Gesture 527 is performed with a third responsive behavior that is different from the first behavior. Specifically, the third responsive behavior here is to display the moveable objects without alignment guides.

Though the user interfaces in Figs. 5I-5O depict an exemplary user interface where a second responsive behavior is performed in response to detecting three size increases of the single finger contact, i.e., 525-1, 525-2, and 525-3, some embodiments may perform a second responsive behavior in response to detecting two size increases of the single finger contact, e.g., 525-1 and 525-2. Additional, alternative embodiments may perform a second responsive behavior in response to detecting only one size increase of the single finger contact, e.g., 525-1.

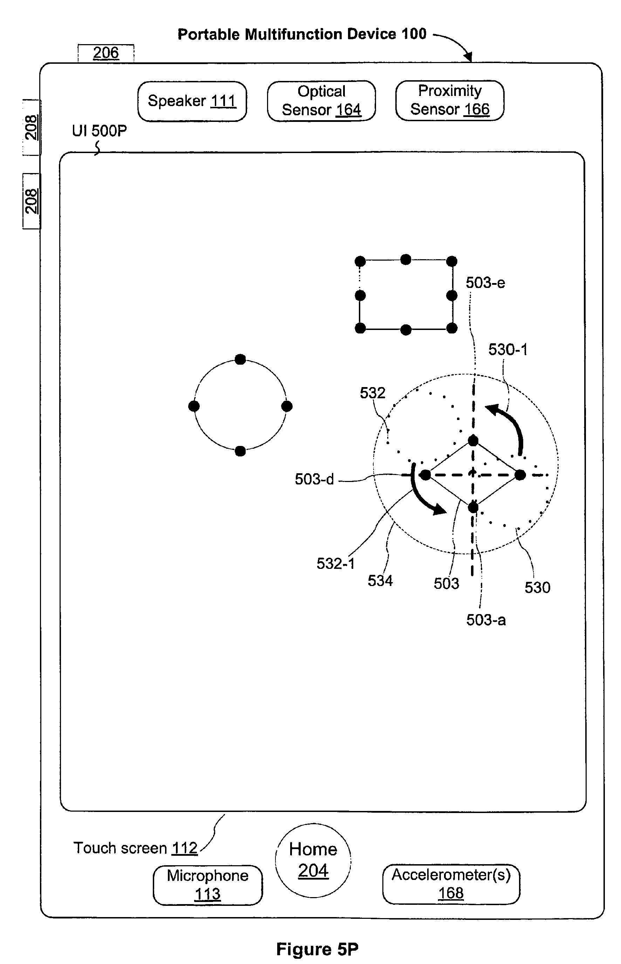

UI 500P (Fig. 5P) depicts that circle 501 was moved to another location within the electronic document in accordance with gesture 527, then the device detected a liftoff of the single finger contact 523.

UI 500P also illustrates another gesture type, which simultaneously detects a first point of contact 530 and a second point of contact 532 on the touch screen 112, wherein the first and second points of contact define two points on opposite sides of a perimeter of a circle 534 (displayed in Fig. 5P-5Q for illustrative purposes).

UI 500P also illustrates that the device detects a first portion of a first gesture with the two points of contact. Specifically, in this example, first point of contact 530 and second point of contact 532 are rotating on screen via movements 530-1 and 532-1, respectively. Accordingly, a first responsive behavior is performed within the user interface, which in this example is the display of alignment guides in conjunction with the displayed, moveable objects, e.g., attachment handle 503-a, and extended alignment guides 503-d and 503-e with respect to diamond 503.

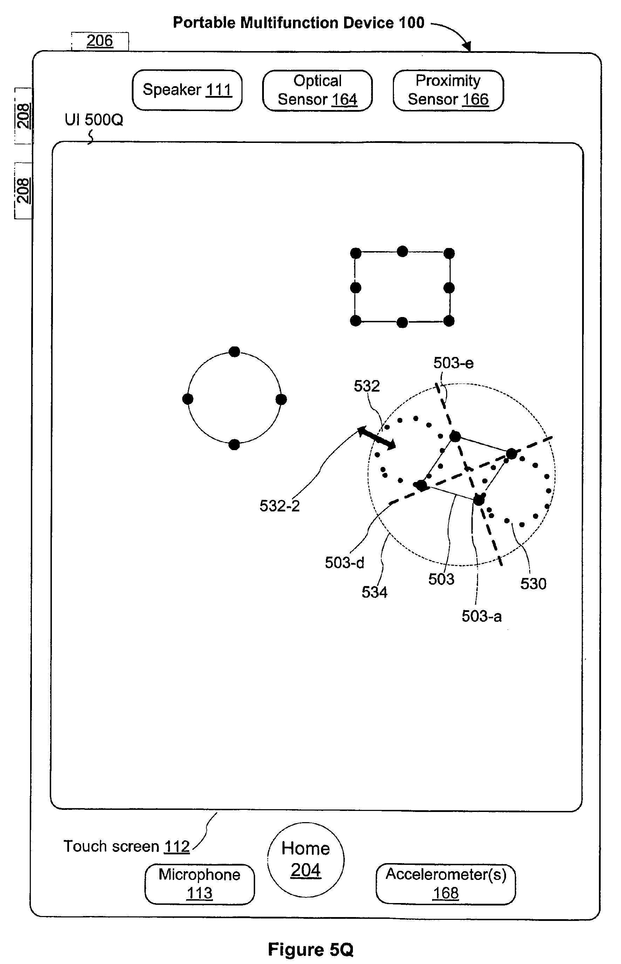

UI 500Q (Fig. 5Q) depicts, that after detecting the first portion of the first gesture, the device detects a second gesture 532-2 made with one of the first and second points of contact on the touch-sensitive surface, wherein the second gesture deviates from the perimeter of the circle 534. In this particular example, the second gesture 532-2 is made with just the second point of contact 532.

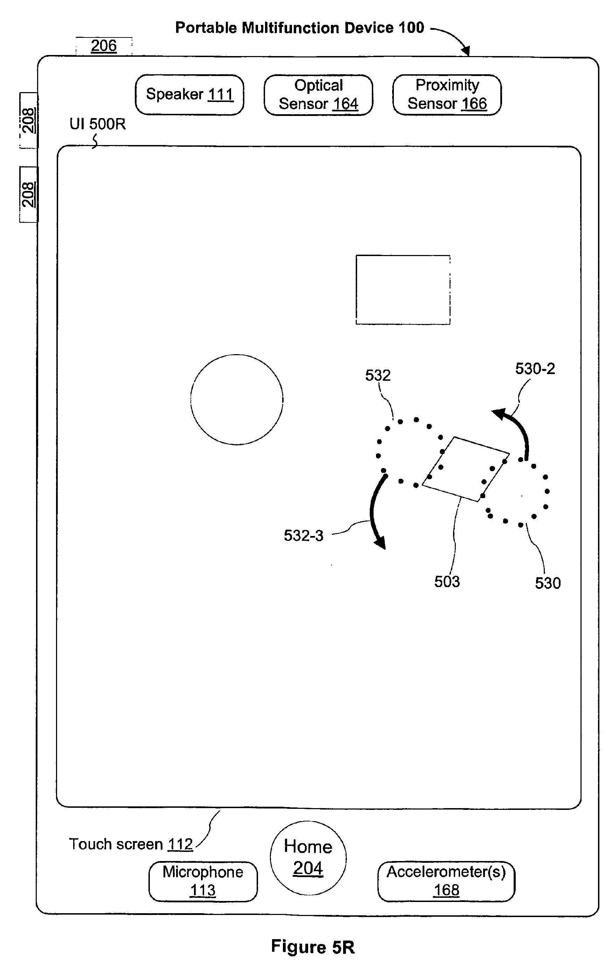

UI 500R (Fig. 5R) illustrates that after detecting the second gesture 532-2, a second responsive behavior is performed within the user interface, which is different from the first responsive behavior. In this example, as noted above, the first responsive behavior was to display the alignment guides in conjunction with the displayed, moveable objects. The second responsive behavior is to cease displaying the alignment guides in conjunction with the displayed, moveable objects. The cessation of displaying the alignment guides in conjunction with the displayed, moveable objects is illustrated in UI 500R.

UI 500R also illustrates that after detecting the second gesture 532-2, a second portion of the first gesture made with the first and second points of contact is detected on the touch-sensitive surface, i.e., movement 530-2 of the first point of contact and movement 532-3 of the second point of contact.

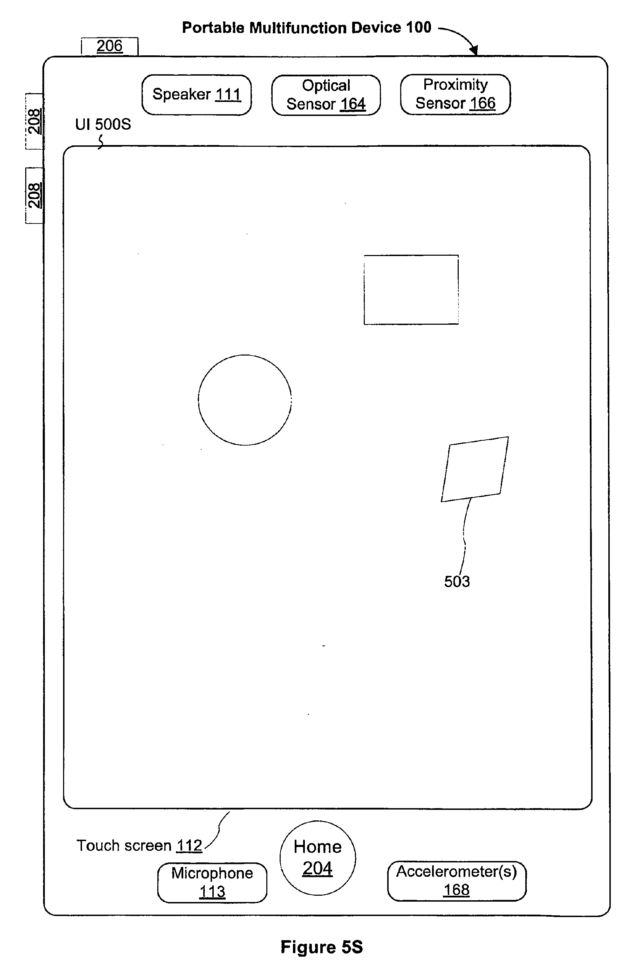

UI 500S (Fig. 5S) illustrates that a third responsive behavior is performed within the user interface in accordance with the second portion of the first gesture, wherein the third responsive behavior is different from the first responsive behavior. Specifically, the first responsive behavior included displaying alignment guides in conjunction with the displayed, moveable objects while rotating an object. The third responsive behavior here is to display the displayed, moveable objects without alignment guides while rotating an object, and is therefore, a modification of the first responsive behavior.

Finally, UI 500S depicts that, in response to the second portion of the first gesture, diamond 503 has been rotated to a new position within the electronic document displayed within the user interface.

Figures 6A-6B are flow diagrams illustrating a method 600 of using mid-drag gestures in accordance with some embodiments. The method 600 is performed at a multifunction device (e.g., device 300, Figure 3, or portable multifunction device 100, Figure 1) with a display and a touch-sensitive surface. In some embodiments, the display is a touch screen display and the touch-sensitive surface is on the display. In some embodiments, the display is separate from the touch-sensitive surface. Some operations in method 600 may be combined and/or the order of some operations may be changed.

As described below, the method 600 provides an intuitive way to use mid-drag gestures for varying purposes, such as modifying user interface behaviors, changing optionally displayed items, etc. The method reduces the cognitive burden on a user when modifying user interface behaviors, thereby creating a more efficient human-machine interface. For battery-operated computing devices, enabling a user to use mid-drag gestures allows for faster and more efficient use of user interfaces, thereby conserving power and increasing the time between battery charges.

The device displays (602) a user interface on the display (e.g., Fig. 5A, UI 500A).

In some embodiments, the user interface includes an electronic document (604) (e.g., Fig. 5A, user interface UI 500A includes an electronic document with user interface elements that are displayed, moveable objects, i.e., circle 501, rectangle 502, and diamond 503).

In some embodiments, the electronic document includes at least a displayed object, and the device detects that the single finger contact on the touch-sensitive surface corresponds to a location of the displayed object on the display; and the device moves the displayed object on the display in accordance with the first movement of the single finger contact on the touch-sensitive surface (606) (e.g., Fig. 5A, user interface UI 500A includes an electronic document with user interface elements that are displayed, moveable objects, i.e., circle 501, rectangle 502, and diamond 503; Fig. 5C third movement 511 of the single finger contact 505; and Fig. 5D depicts that rectangle 502 has been moved to a new position in accordance with the third movement 511 of the single finger contact 505).

While detecting a single finger contact on the touch-sensitive surface (608), the device may perform a number of steps, as described below.

The device detects (610) a first movement of the single finger contact that corresponds to a first portion of a first gesture on the touch-sensitive surface (e.g., Fig. 5A depicts that device 100 detects a first movement 507 of the single finger contact 505 on the touch screen 112.)

The device performs (612) a first responsive behavior within the user interface in accordance with the first portion of the first gesture (e.g., Fig 5B, illustrating that after detecting the first movement 507 in UI 500A, the device has performed a first responsive behavior of displaying alignments guides in conjunction with the displayed objects circle 501, rectangle 502, and diamond 503).

In some embodiments, the first responsive behavior includes displaying one or more alignment guides in conjunction with the displayed object (614) (e.g., Fig 5B, illustrating that after detecting the first movement 507 in UI 500A, the device has performed a first responsive behavior of displaying alignments guides in conjunction with the displayed objects circle 501, rectangle 502, and diamond 503).

In some embodiments, the one or more alignment guides extend from the displayed object (616) (e.g., Fig. 5B, extended alignment guides 502-c and 502-d with respect to rectangle 502; and extended alignment guide 503-c with respect to diamond 503). As shown in UI 500B, in some embodiments, alignment guides may include linear projections extending from the displayed object. In some embodiments, the one or more alignment guides may include attachment handles on the displayed object. In some embodiments, the one or more alignment guides may include snap-to handles on the displayed object.

In some embodiments, the first responsive behavior includes snap-to movement of the displayed object upon determining that the displayed object is closer than a predetermined distance threshold from a second displayed object (618).

After detecting the first movement, the device detects (622) a second movement of the single finger contact on the touch-sensitive surface that corresponds to a second gesture that is different from the first gesture (e.g., in Fig. 5B, device 100 detects a second movement 509 of the single finger contact 505, which is different from the first movement 507 in Fig. 5A).

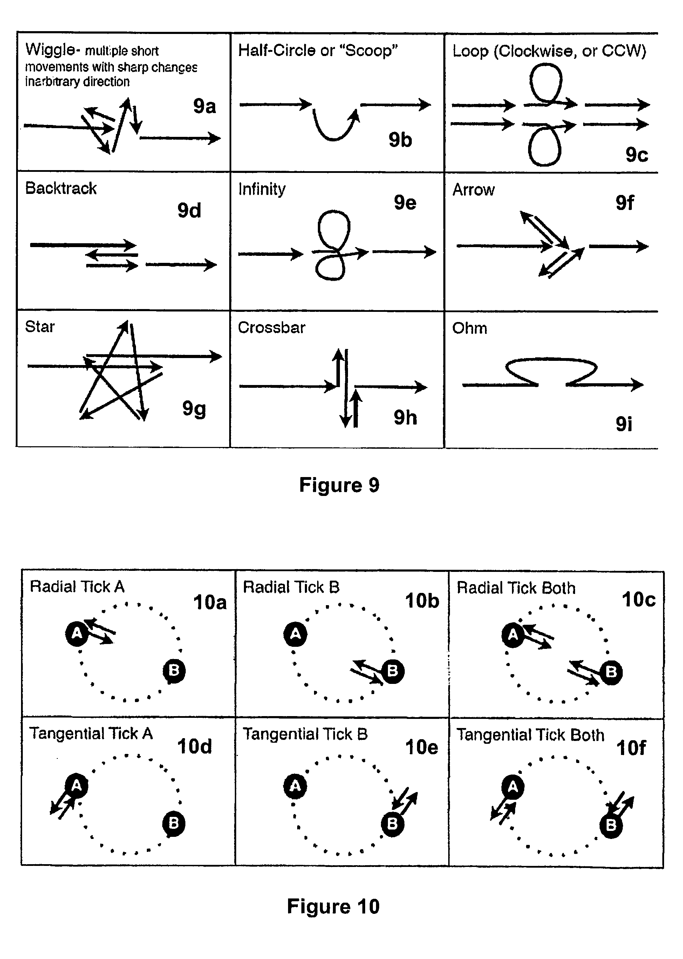

In some embodiments, the second movement of the single finger contact on the touch-sensitive surface is a wiggle gesture (624) (e.g., Fig. 5B second movement 509 is a wiggle gesture). In some embodiments, the wiggle gesture is a mid-drag gesture that lets a user "shake off" the alignment guides displayed in conjunction with the displayed objects. Mid-drag gestures include microgestures, such as the wiggle gesture, that occur during the middle of a single finger gesture that is moving or dragging an object on the display. Additional, exemplary single-finger mid-drag gestures are shown in Fig. 9, discussed below.

In some embodiments, the second movement of the single finger contact on the touch-sensitive surface transitions the multifunction device to a next operative mode in a series of two or more operational modes (626).

In certain embodiments, the device provides an operational-mode-change indicia after detecting the second movement of the single finger contact on the touch-sensitive surface (628) (e.g., visual, auditory, or haptic feedback after the second movement of the single finger contact on the touch-sensitive surface).

The device performs (630) a second responsive behavior within the user interface in response to the second gesture, wherein the second responsive behavior is different from the first responsive behavior (e.g., in Fig. 5C, where after detecting the second movement 509 of the single finger contact 505, the device performs a second responsive behavior within the user interface, i.e., the alignments guides are no longer displayed).

In some embodiments, the second responsive behavior includes terminating display of the one or more alignment guides (632) (e.g., in Fig. 5C, where after detecting the second movement 509 of the single finger contact 505, the device performs a second responsive behavior within the user interface, i.e., the alignments guides are no longer displayed).

After detecting the second movement, the device detects (634) a third movement of the single finger contact on the touch-sensitive surface, wherein the third movement corresponds to a second portion of the first gesture (e.g., 500C depicts that device 100 detects a third movement 511 of the single finger contact 505, where the third movement 511 corresponds to a second portion of the first gesture).

In some embodiments, the third movement corresponds to a continuation of the first gesture (635) (e.g., 500C depicts that device 100 detects a third movement 511 of the single finger contact 505, corresponding to a continuation of the first gesture).

The device performs (636) a third responsive behavior within the user interface in accordance with the second portion of the first gesture, wherein the third responsive behavior is different from the first responsive behavior (e.g., Fig. 5C, where the third responsive behavior that is different from the first responsive behavior is to show the displayed objects *without* alignments guides when moving an object).

In some embodiments, the change in responsive behavior that occurs in response to the second gesture occurs before completion of the first gesture. For example, a first gesture may include a first part and a second part, which are interrupted by a second gesture contiguous with the first part and the second part. In that case, the device responds to the second gesture by adjusting or modifying the responsive behavior in the user interface before the second portion of the first gesture.

In some embodiments, the third responsive behavior is an alteration (e.g., a modification) of the first responsive behavior (638) (e.g., in the examples of Figs. 5A-5C, the first responsive behavior was to display alignments guides in conjunction with the displayed objects when moving an object, and the third responsive behavior was a modification of first responsive behavior by showing the displayed objects *without* alignments guides when moving an object).

In some embodiments, after termination of the second portion of the first gesture, the device reverts (640) to responding with the first responsive behavior in response to detecting a new gesture substantially similar to the first gesture. In other words, the responsive behavior mode change lasts for the duration of the second portion of the first gesture. For example, using the example of alignment guides, these embodiments could:
- Respond to a first portion of a first object drag gesture by displaying alignment guides in conjunction with an object.
- Respond to a mid-drag wiggle gesture by ceasing to display alignment guides in conjunction with the object.
- Respond to a second portion of the first object drag gesture by displaying the object without alignment guides during the extent of the first object drag gesture.
- Respond to a first portion of a *second* object drag gesture by displaying alignment guides in conjunction with an object.

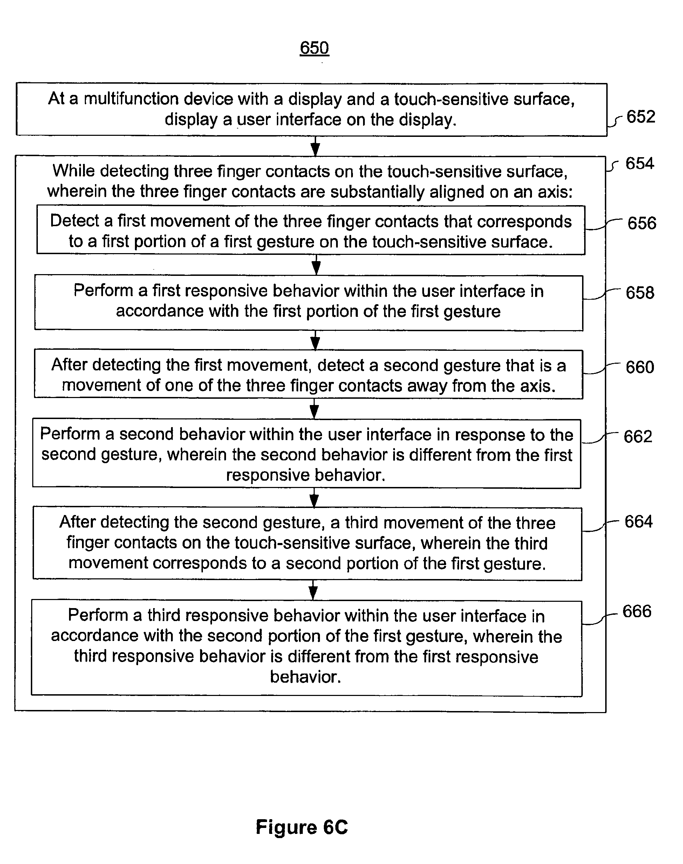

Figure 6C is a flow diagram illustrating a method 650 of using mid-drag gestures in accordance with some embodiments. The method 650 is performed at a multifunction device (e.g., device 300, Figure 3, or portable multifunction device 100, Figure 1) with a display and a touch-sensitive surface. In some embodiments, the display is a touch screen display and the touch-sensitive surface is on the display. In some embodiments, the display is separate from the touch-sensitive surface. Some operations in method 650 may be combined and/or the order of some operations may be changed.

As described below, the method 650 provides an intuitive way to use mid-drag gestures for varying purposes, such as modifying user interface behaviors, changing optionally displayed items, etc. The method reduces the cognitive burden on a user, thereby creating a more efficient human-machine interface. For battery-operated computing devices, enabling a user to use mid-drag gestures allows for faster and more efficient use of user interfaces, thereby conserving power and increasing the time between battery charges.

The device displays (652) a user interface on the display (e.g., the user interface UI 500F in Fig. 5F).

While detecting three finger contacts on the touch-sensitive surface, wherein the three finger contacts are substantially aligned on an axis (654), the device may perform a number of steps, as described below (e.g., Fig. 5F, finger contacts 515-1, 515-2, and 515-3 are detected on touch screen 112, and are substantially aligned on axis 517).

The device detects (656) a first movement of the three finger contacts that corresponds to a first portion of a first gesture on the touch-sensitive surface.

The device performs (658) a first responsive behavior within the user interface in accordance with the first portion of the first gesture (e.g., Fig. 5F depicts the display of alignment guides as a first responsive behavior, i.e., attachment handles 501-a and 501-b with respect to circle 501; attachment handle 502-a and extended alignment guides 502-c and 502-d with respect to rectangle 502; and attachment handles 503-a and 503-b, and extended alignment guide 503-f with respect to diamond 503).

After detecting the first movement, the device detects (660) a second gesture that is a movement of one of the three finger contacts away from the axis (i.e., when one of the three finger contacts moves away from the axis, the other two fingers remain substantially aligned on the axis) (e.g., Fig. 5G, the device detects second gesture 519 where finger contact 515-2 has moved away from the axis 517, while the other two finger contacts 515-1 and 515-3 remain substantially aligned on the axis 517).

The device performs (662) a second responsive behavior within the user interface in response to the second gesture, wherein the second responsive behavior is different from the first responsive behavior (e.g., Fig. 5H, where the user interface stops displaying the alignment guides in conjunction with the displayed objects).

After detecting the second gesture, the device detects (664) a third movement of the three finger contacts on the touch-sensitive surface, wherein the third movement corresponds to a second portion, or continuation, of the first gesture (e.g., Fig. 5H, where the device detects a third movement 521 of the three finger contacts that corresponds to a second portion of the first gesture).

The device performs (666) a third responsive behavior within the user interface in accordance with the second portion of the first gesture, wherein the third responsive behavior is different from the first responsive behavior (e.g. in the transition from Fig. 5H to Fig. 5I, alignment guides were not displayed while rectangle 502 was being moved in accordance with movement 521).

Though not included for the purposes of brevity, many of the same method variations discussed with respect to method 600 may also be applied to method 650 to the extent they do not exclusively rely on a single finger contact.

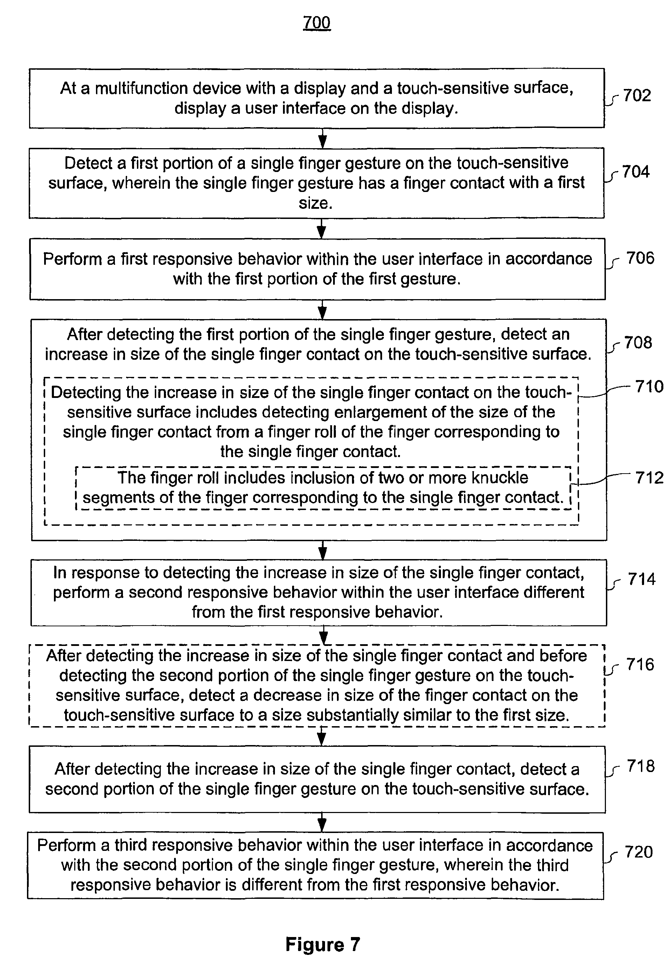

Figure 7 is a flow diagram illustrating a method 700 of using mid-drag gestures in accordance with some embodiments. The method 700 is performed at a multifunction device (e.g., device 300, Figure 3, or portable multifunction device 100, Figure 1) with a display and a touch-sensitive surface. In some embodiments, the display is a touch screen display and the touch-sensitive surface is on the display. In some embodiments, the display is separate from the touch-sensitive surface. Some operations in method 700 may be combined and/or the order of some operations may be changed.

As described below, the method 700 provides an intuitive way to use mid-drag gestures for varying purposes, such as modifying user interface behaviors, changing optionally displayed items, etc. The method reduces the cognitive burden on a user, thereby creating a more efficient human-machine interface. For battery-operated computing devices, enabling a user to use mid-drag gestures allows for faster and more efficient use of user interfaces, thereby conserving power and increasing the time between battery charges.

The device displays (702) a user interface on the display (e.g., Fig. 5I includes the display of UI 500I on touch screen 112).

The device detects (704) a first portion of a single finger gesture on the touch-sensitive surface, wherein the single finger gesture has a finger contact with a first size (e.g., Fig. 5I, single finger gesture 523 has been detected on circle 501, and single finger gesture 523 has a first size 523-1).

The device performs (706) a first responsive behavior within the user interface in accordance with the first portion of the first gesture (e.g., Fig. 5I, a first responsive behavior is performed within the user interface in accordance with the gesture 523, i.e., displaying alignment guides in conjunction with the displayed moveable objects circle 501, rectangle 502, and diamond 503, including attachment handles 501-a and 501-b and extended alignment guides 501-c and 501-d with respect to circle 501).

After detecting the first portion of the single finger gesture, the device detects (708) an increase in size of the single finger contact on the touch-sensitive surface (e.g., Fig. 5J, detecting an increase in size 525-1 of the single finger contact 523 on the touch screen 112).

In some embodiments, detecting the increase in size of the single finger contact on the touch-sensitive surface includes detecting enlargement of the size of the single finger contact from a finger roll of the finger corresponding to the single finger contact (710) (e.g., Fig. 5J, where detecting the increase in size 525-1 of the single finger contact 523 is from a finger roll of the finger corresponding to the single finger contact).

In some embodiments, the finger roll includes inclusion of two or more knuckle segments of the finger corresponding to the single finger contact (712) (e.g., Fig. 5J increase in size 525-1 a single knuckle segment, Fig. 5K, increase in size 525-2 is a second knuckle segment, and in Fig. 5L, increase in size 525-3 is a third knuckle segment).

In response to detecting the increase in size of the single finger contact, the device performs (714) a second responsive behavior within the user interface different from the first responsive behavior (Fig. 5L illustrates that a second responsive behavior is performed within the user interface that is different from the first responsive behavior: namely, the alignment guides are no longer displayed).

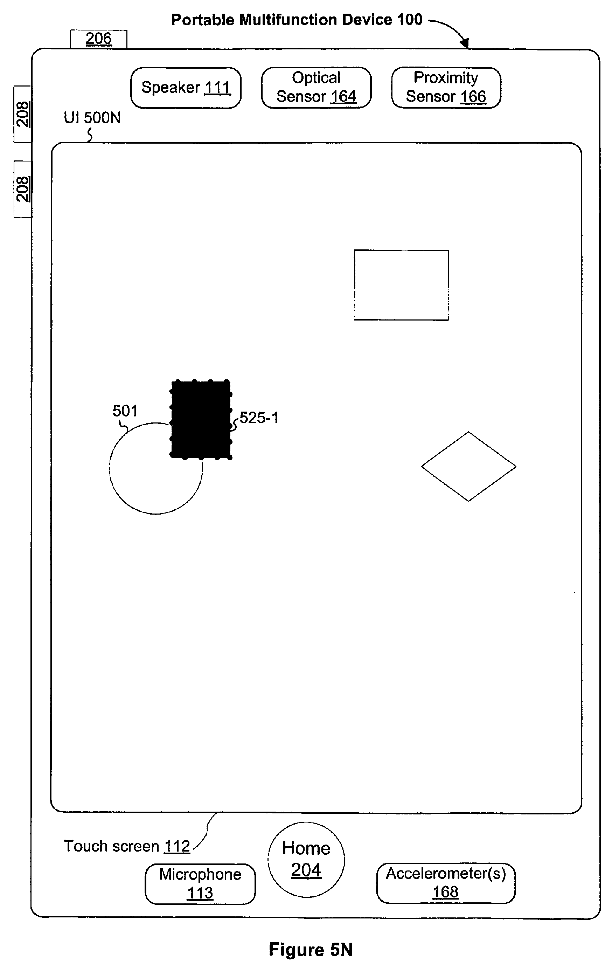

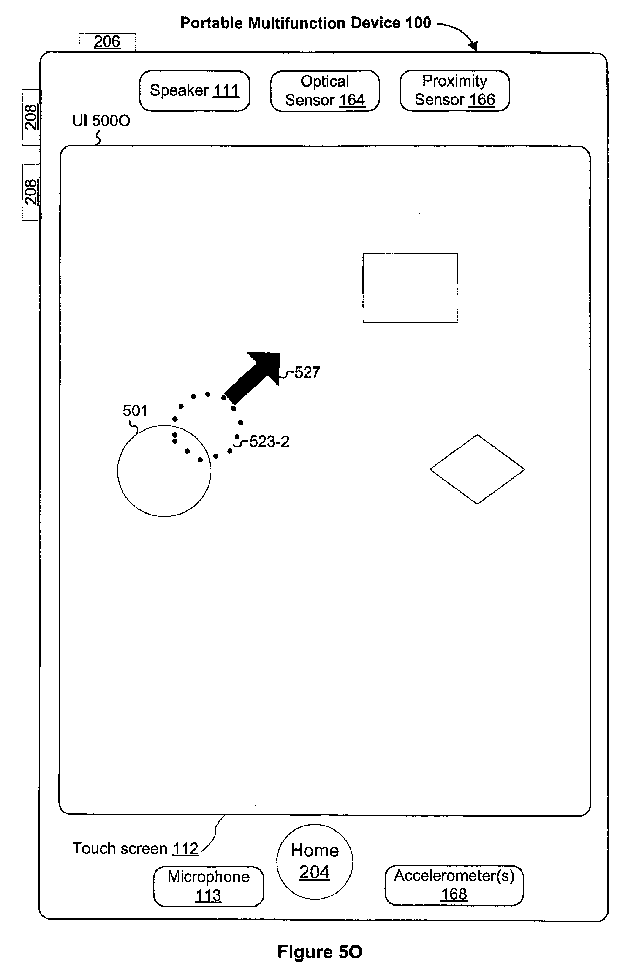

After detecting the increase in size of the single finger contact and before detecting the second portion of the single finger gesture on the touch-sensitive surface, the device detects a decrease in size of the finger contact on the touch-sensitive surface to a size substantially similar to the first size (716) (e.g., the transition from Fig. 5N finger contact 525-1 to Fig. 5O finger contact 523-2, which is substantially similar in size to 523-1).

After detecting the increase in size of the single finger contact, the device detects (718) a second portion of the single finger gesture on the touch-sensitive surface (e.g., Fig. 5O finger gesture 527 that corresponds to a second portion of the single finger gesture 523-2 on the touch screen 112).

The device performs (720) a third responsive behavior within the user interface in accordance with the second portion of the single finger gesture, wherein the third responsive behavior is different from the first responsive behavior (e.g., Fig. 5O, finger gesture 527 is performed with a third responsive behavior different from the first behavior, namely, the third responsive behavior is to display the moveable objects without alignment guides).

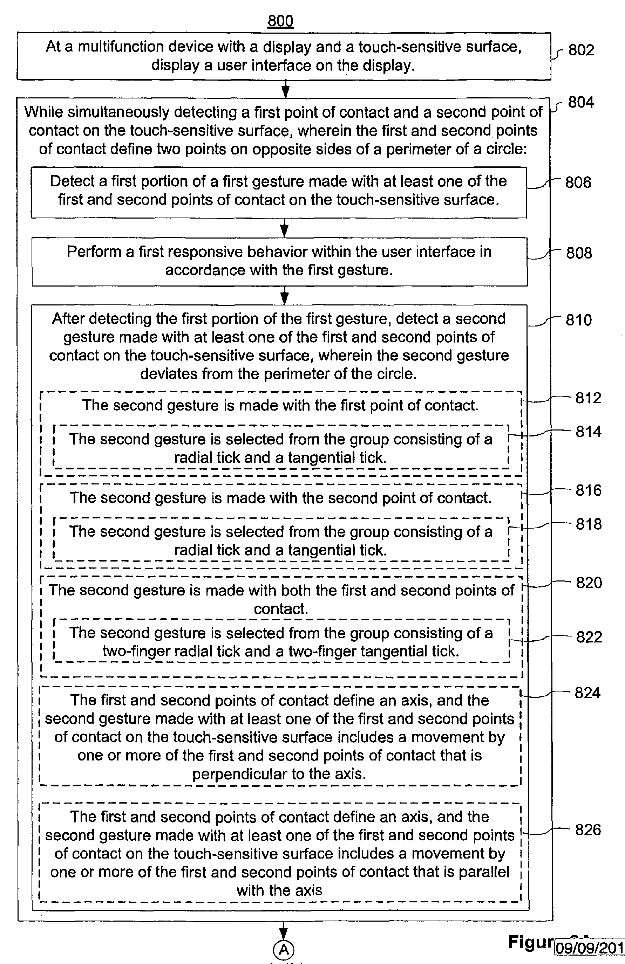

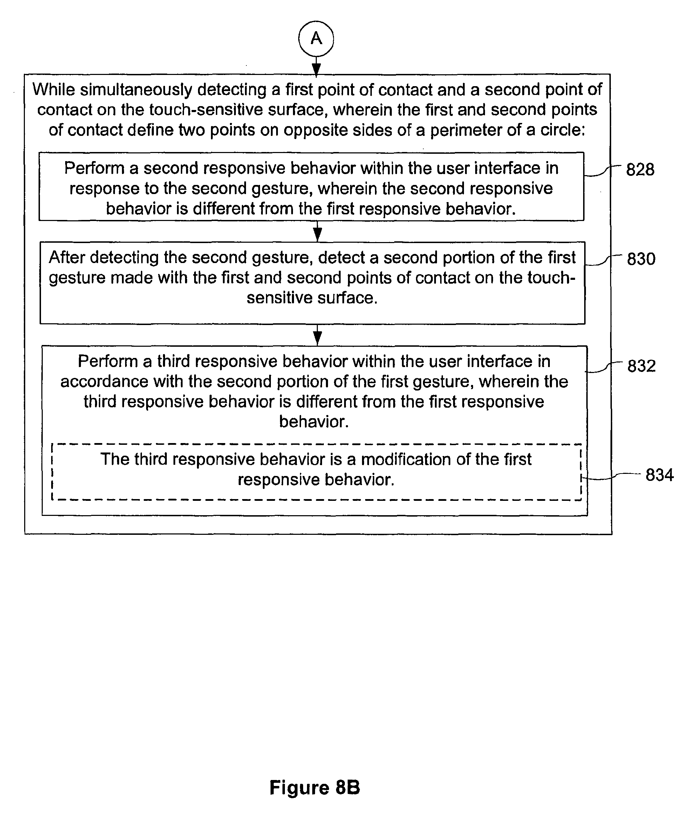

Figures 8A-8B are flow diagrams illustrating a method 800 of using mid-drag gestures in accordance with some embodiments. The method 800 is performed at a multifunction device (e.g., device 300, Figure 3, or portable multifunction device 100, Figure 1) with a display and a touch-sensitive surface. In some embodiments, the display is a touch screen display and the touch-sensitive surface is on the display. In some embodiments, the display is separate from the touch-sensitive surface. Some operations in method 800 may be combined and/or the order of some operations may be changed.

As described below, the method 800 provides an intuitive way to use mid-drag gestures for varying purposes, such as modifying user interface behaviors, changing optionally displayed items, etc. The method reduces the cognitive burden on a user, thereby creating a more efficient human-machine interface. For battery-operated computing devices, enabling a user to use mid-drag gestures allows for faster and more efficient use of user interfaces, thereby conserving power and increasing the time between battery charges.

The device displays (802) a user interface on the display (e.g., Fig. 5P, UI 500P).

While simultaneously detecting a first point of contact and a second point of contact on the touch-sensitive surface, wherein the first and second points of contact define two points on opposite sides of a perimeter of a circle (804), the device may perform steps discussed below (e.g., Fig. 5P illustrates that the device simultaneously detects a first point of contact 530 and a second point of contact 532 on the touch screen 112, wherein the first and second points of contact define two points on opposite sides of a perimeter of a circle 534).

The device detects (806) a first portion of a first gesture made with at least one of the first and second points of contact on the touch-sensitive surface (e.g., Fig. 5P illustrates a first potion of a first gesture where first point of contact 530 and second point of contact 532 are rotating on screen via movements 530-1 and 532-1, respectively).

The device performs (808) a first responsive behavior within the user interface in accordance with the first gesture (e.g., Fig. 5P a first responsive behavior is performed within the user interface, namely, the display of alignment guides in conjunction with diamond 503, i.e., attachment handle 503-a, and extended alignment guides 503-d and 503-e ).

After detecting the first portion of the first gesture, detecting a second gesture made with at least one of the first and second points of contact on the touch-sensitive surface, wherein the second gesture deviates from, departs from, transits over, or crosses, the perimeter of the circle (810) (e.g., Fig. 5Q, second gesture 532-2 that is made with the second point of contact 532, and deviates from the perimeter of the circle 534).

In some embodiments, the second gesture is made just with the first point of contact (812). In some embodiments, the second gesture is selected from the group consisting of a radial tick and a tangential tick (814). In some embodiments, the second gesture is made just with the second point of contact (816). In some embodiments, the second gesture is selected from the group consisting of a radial tick and a tangential tick (818). In some embodiments, the second gesture is made with both the first and second points of contact (820). In some embodiments, the second gesture is selected from the group consisting of a two-finger radial tick and a two-finger tangential tick (822).

In some embodiments, the first and second points of contact define an axis, and the second gesture made with at least one of the first and second points of contact on the touch-sensitive surface includes a movement by one or more of the first and second points of contact that is perpendicular to the axis (824). In some embodiments, the first and second points of contact define an axis, and the second gesture made with at least one of the first and second points of contact on the touch-sensitive surface includes a movement by one or more of the first and second points of contact that is parallel with the axis (826).

The device performs (828) a second responsive behavior within the user interface in response to the second gesture, wherein the second responsive behavior is different from the first responsive behavior (e.g., Fig. 5R, cessation of displaying the alignment guides in conjunction with the displayed, moveable objects is illustrated in UI 500R as the second responsive behavior).

After detecting the second gesture, the device detects (830) a second portion of the first gesture made with the first and second points of contact on the touch-sensitive surface (e.g., Fig. 5R, movement 530-2 of the first point of contact and movement 532-3 of the second point of contact).

The device performs (832) a third responsive behavior within the user interface in accordance with the second portion of the first gesture, wherein the third responsive behavior is different from the first responsive behavior (e.g., in Fig. 5P, the first responsive behavior included displaying alignment guides in conjunction with the displayed, moveable objects while rotating an object; in Fig. 5R, the third responsive behavior is to display the displayed, moveable objects without alignment guides while rotating an object, and is therefore, different from the first responsive behavior).

The third responsive behavior is a modification of the first responsive behavior (834) (e.g., in Fig. 5P, the first responsive behavior included displaying alignment guides in conjunction with the displayed, moveable objects while rotating an object; in Fig. 5R, the third responsive behavior is to display the displayed, moveable objects without alignment guides while rotating an object, and is therefore, a modification of the first responsive behavior).

Figure 9 is a set of exemplary illustrations of one-finger mid-drag gestures in accordance with some embodiments.
- Fig. 9A illustrates a "wiggle" mid-drag gesture, which includes multiple short movements with sharp changes in an arbitrary direction;
- Fig. 9B illustrates a half-circle, or "scoop" mid-drag gesture;
- Fig. 9C illustrates both clockwise and counter-clockwise loop mid-drag gestures;
- Fig. 9d illustrates a "backtrack" mid-drag gesture;
- Fig. 9e illustrates an "infinity" mid-drag gesture;
- Fig. 9f illustrates an "arrow" mid-drag gesture;
- Fig. 9g illustrates a "star" mid-drag gesture;
- Fig. 9h illustrates a "crossbar" mid-drag gesture; and
- Fig. 9i illustrates an "ohm" mid-drag gesture.

Any of the foregoing single finger gestures may be used in the methods and devices discussed herein, and other convenient single finger gestures may be devised and fall within the scope of this disclosure.

Figure 10 is a set of exemplary illustrations of two-finger microgestures in accordance with some embodiments.
- Fig. 10a illustrates a "radial tick" with a first finger contact microgesture;
- Fig. 10b illustrates a "radial tick" with a second finger contact microgesture;
- Fig. 10c illustrates a "radial tick" with both finger contacts microgesture;
- Fig. 10d illustrates a "tangential tick" with a first finger contact microgesture;
- Fig. 10e illustrates a "tangential tick" with a second finger contact microgesture; and
- Fig. 10f illustrates a "tangential tick" with both finger contacts microgesture.

Any of the foregoing two-finger gestures may be used in the methods and devices discussed herein, and other convenient two-finger gestures may be devised and fall within the scope of this disclosure.

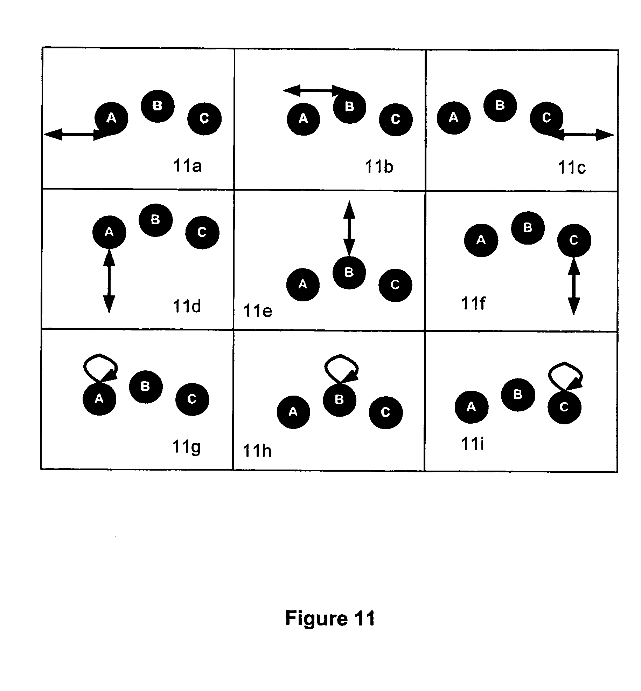

Figure 11 is a set of exemplary illustrations of three-finger microgestures in accordance with some embodiments.
- Fig. 11a illustrates an "axial tick" with a first finger contact microgesture;
- Fig. 11b illustrates an "axial tick" with a second finger contact microgesture;
- Fig. 11c illustrates an "axial tick" with a third finger contact microgesture;
- Fig. 11d illustrates an "off-axial tick" with a first finger contact microgesture;
- Fig. 11e illustrates an "off-axial tick" with a second finger contact microgesture;
- Fig. 11f illustrates an "off-axial tick" with a third finger contact microgesture;
- Fig. 11g illustrates a circular microgesture with a first finger contact;
- Fig. 11h illustrates a circular microgesture with a second finger contact; and
- Fig. 11i illustrates a circular microgesture with a third finger contact.

Any of the foregoing three-finger gestures may be used in the methods and devices discussed herein, and other convenient three-finger gestures may be devised and fall within the scope of this disclosure.

The steps in the information processing methods described above may be implemented by running one or more functional modules in information processing apparatus such as general purpose processors or application specific chips. These modules, combinations of these modules, and/or their combination with general hardware (e.g., as described above with respect to Figures 1A, 1B and 3) are all included within the scope of protection of the invention.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method, comprising:
at a multifunction device (100) with a display and a touch-sensitive surface (112):
displaying (602) a user interface (200) on the display;
while detecting a single finger contact on the touch-sensitive surface:
detecting (610) a first movement (507) of the single finger contact (505) that corresponds to a first portion of a first gesture on the touch-sensitive surface;
performing (612) a first responsive behavior within the user interface in accordance with the first portion of the first gesture;
the method being **characterized by** the steps of:
after detecting the first movement, detecting (622) a second movement (509) of the single finger contact on the touch-sensitive surface that corresponds to a second gesture that is different from the first gesture;
performing (630) a second responsive behavior within the user interface in response to the second gesture, wherein the second responsive behavior is different from the first responsive behavior;
after detecting the second movement, detecting (634) a third movement (511) of the single finger contact on the touch-sensitive surface, wherein the third movement corresponds to a second portion of the first gesture; and,
performing (636) a third responsive behavior within the user interface in accordance with the second portion of the first gesture, wherein the third responsive behavior is different from the first responsive behavior.

2. The method of claim 1, wherein the third responsive behavior is an alteration of the first responsive behavior.

3. The method of claim 1, wherein the third movement corresponds to a continuation of the first gesture.

4. The method of claim 1, wherein the user interface includes an electronic document (Fig. 5A).

5. The method of claim 3, wherein the electronic document includes at least a displayed object (502), and further comprising:
detecting that the single finger contact (505) on the touch-sensitive surface corresponds to a location of the displayed object on the display; and
moving the displayed object on the display in accordance with the first movement (507) of the single finger contact on the touch-sensitive surface.

6. The method of claim 5, wherein the first responsive behavior includes displaying one or more alignment guides (502) in conjunction with the displayed object.

7. The method of claim 6, wherein the one or more alignment guides extend from the displayed object.

8. The method of claim 6, wherein the first responsive behavior includes snap-to movement of the displayed object upon determining that the displayed object is closer than a predetermined distance threshold from a second displayed object.

9. The method of claim 6, wherein the second responsive behavior includes terminating display of the one or more alignment guides.

10. The method of claim 1, wherein the second movement of the single finger contact on the touch-sensitive surface is a wiggle gesture (509).

11. The method of claim 1, wherein the second movement of the single finger contact on the touch-sensitive surface transitions the multifunction device to a next operational mode in a series of two or more operational modes.

12. The method of claim 11, further comprising providing an operational-mode-change indicia after detecting the second movement of the single finger contact on the touch-sensitive surface.

13. The method of claim 1, further comprising:
after termination of the second portion of the first gesture, reverting to responding with the first responsive behavior in response to detecting a new gesture substantially similar to the first gesture.

14. A multifunction device (100) with a display and a touch-sensitive surface (112), the multifunction device adapted to implement the method of any one of claims 1 to 13.

15. A computer readable storage medium having stored therein instructions, which when executed by a multifunction device (100) with a display and a touch-sensitive surface (112), cause the device to implement the method of any one of claims 1 to 13.

## Patentansprüche

1. Verfahren, umfassend:
an einer Multifunktionsvorrichtung (100) mit einer Anzeige und einer berührungsempfindlichen Oberfläche (112):
Anzeigen (602) einer Benutzerschnittstelle (200) auf der Anzeige;
während einer Detektion eines einzigen Fingerkontakts auf der berührungsempfindlichen Oberfläche:
Detektieren (610) einer ersten Bewegung (507) des einzigen Fingerkontakts (505), die einem ersten Teil einer ersten Geste auf der berührungsempfindlichen Oberfläche entspricht;
Ausführen (612) eines ersten Reaktionsverhaltens innerhalb der Benutzerschnittstelle gemäß dem ersten Teil der ersten Geste;
wobei das Verfahren durch die folgenden Schritte gekennzeichnet ist:
nach dem Detektieren der ersten Bewegung, Detektieren (622) einer zweiten Bewegung (509) des einzigen Fingerkontakts auf der berührungsempfindlichen Oberfläche, die einer zweiten Geste entspricht, die sich von der ersten Geste unterscheidet;
Ausführen (630) eines zweiten Reaktionsverhaltens innerhalb der Benutzerschnittstelle in Antwort auf die zweite Geste, wobei das zweite Reaktionsverhalten sich von dem ersten Reaktionsverhalten unterscheidet;
nach dem Detektieren der zweiten Bewegung, Detektieren (634) einer dritten Bewegung (511) des einzigen Fingerkontakts auf der berührungsempfindlichen Oberfläche, wobei die dritte Bewegung einem zweiten Teil der ersten Geste entspricht; und
Ausführen (636) eines dritten Reaktionsverhaltens innerhalb der Benutzerschnittstelle gemäß dem zweiten Teil der ersten Geste, wobei das dritte Reaktionsverhalten sich von dem ersten Reaktionsverhalten unterscheidet.

2. Verfahren nach Anspruch 1, bei welchem das dritte Reaktionsverhalten eine Änderung des ersten Reaktionsverhaltens ist.

3. Verfahren nach Anspruch 1, bei welchem die dritte Bewegung einer Fortsetzung der ersten Geste entspricht.

4. Verfahren nach Anspruch 1, bei welchem die Benutzerschnittstelle ein elektronisches Dokument (Fig. 5A) enthält.

5. Verfahren nach Anspruch 3, bei welchem das elektronische Dokument zumindest ein angezeigtes Objekt (502) enthält und weiterhin umfassend:
Detektieren, dass der einzige Fingerkontakt (505) auf der berührungsempfindlichen Oberfläche einem Ort des angezeigten Objekts auf der Anzeige entspricht; und
Bewegen des angezeigten Objekts auf der Anzeige gemäß der ersten Bewegung (507) des einzigen Fingerkontakts auf der berührungsempfindlichen Oberfläche.

6. Verfahren nach Anspruch 5, bei welchem das erste Reaktionsverhalten ein Anzeigen einer oder mehrerer Ausrichtungsführungen (502) in Zusammenhang mit dem angezeigten Objekt enthält.

7. Verfahren nach Anspruch 6, bei welchem die eine oder die mehreren Ausrichtungsführungen sich vom angezeigten Objekt erstrecken.

8. Verfahren nach Anspruch 6, bei welchem das erste Reaktionsverhalten eine Aufschnappbewegung des angezeigten Objekts, nach dem Bestimmen, dass das angezeigte Objekt von einem zweiten angezeigten Objekt näher als eine vorbestimmte Distanzschwelle ist, enthält.

9. Verfahren nach Anspruch 6, bei welchem das zweite Reaktionsverhalten ein Beenden des Anzeigens der einen oder der mehreren Ausrichtungsführungen enthält.

10. Verfahren nach Anspruch 1, bei welchem die zweite Bewegung des einzigen Fingerkontakts auf der berührungsempfindlichen Oberfläche eine Wackelbewegung (509) ist.

11. Verfahren nach Anspruch 1, bei welchem die zweite Bewegung des einzigen Fingerkontakts auf der berührungsempfindlichen Oberfläche die Multifunktionsvorrichtung auf einen nächsten Betriebsmodus in einer Serie von zwei oder mehr Betriebsmodi überleitet.

12. Verfahren nach Anspruch 11, weiterhin umfassend ein Bereitstellen eines Betriebsmodus-Änderungsindizes nach dem Detektieren der zweiten Bewegung des einzigen Fingerkontakts auf der berührungsempfindlichen Oberfläche.

13. Verfahren nach Anspruch 1, weiterhin umfassend:
nach dem Beenden des zweiten Teils der ersten Geste, Zurückkehren auf ein Antworten mit dem ersten Reaktionsverhalten in Antwort auf ein Detektieren einer neuen Geste, die im Wesentlichen ähnlich zur ersten Geste ist.

14. Multifunktionsvorrichtung (100) mit einer Anzeige und einer berührungsempfindlichen Oberfläche (112), wobei die Multifunktionsvorrichtung dazu eingerichtet ist, das Verfahren nach einem der Ansprüche 1 bis 13 zu implementieren.

15. Computerlesbares Speichermedium mit darauf gespeicherten Instruktionen, die, wenn sie durch eine Multifunktionsvorrichtung (100) mit einer Anzeige und einer berührungsempfindlichen Oberfläche (112) ausgeführt werden, die Vorrichtung dazu veranlassen, das Verfahren nach einem der Ansprüche 1 bis 13 zu implementieren.

## Revendications

1. Un procédé, comprenant :
au niveau d'un dispositif multifonction (100) avec un afficheur et une surface sensible au toucher (112) l'affichage (602) d'une interface utilisateur (200) sur l'afficheur ;
lors de la détection d'un contact par un doigt unique sur la surface sensible au toucher :
la détection (610) d'un premier mouvement (507) du contact par un doigt unique (505) qui correspond à une première partie d'un premier geste sur la surface sensible au toucher ;
l'exécution (612) d'un premier comportement en réponse au sein de l'interface utilisateur conformément à la première partie du premier geste ;
le procédé étant **caractérisé par** les étapes suivantes :
après détection du premier mouvement, la détection (622) d'un second mouvement (509) du contact par un doigt unique sur la surface sensible au toucher qui correspond à un second geste qui est différent du premier geste ;
l'exécution (630) d'un second comportement en réponse au sein de l'interface utilisateur en réponse au second geste, le second comportement en réponse étant différent du premier comportement en réponse ;
après détection du second mouvement, détection (634) d'un troisième mouvement (511) du contact par un doigt unique sur la surface sensible au toucher, le troisième mouvement correspondant à une seconde partie du premier geste ; et
l'exécution (636) d'un troisième comportement en réponse au sein de l'interface utilisateur conformément à la seconde partie du premier geste, le troisième comportement en réponse étant différent du premier comportement en réponse.

2. Le procédé de la revendication 1, dans lequel le troisième comportement en réponse est une altération du premier comportement en réponse.

3. Le procédé de la revendication 1, dans lequel le troisième mouvement correspond à une poursuite du premier geste.

4. Le procédé de la revendication 1, dans lequel l'interface utilisateur comprend un document électronique (Fig. 5A).

5. Le procédé de la revendication 3, dans lequel le document électronique comprend au moins un objet affiché (502), et comprenant en outre :
la détection que le contact par un doigt unique (505) sur la surface sensible au toucher correspond à un emplacement de l'objet affiché sur l'afficheur ; et
le déplacement de l'objet affiché sur l'afficheur conformément au premier mouvement (507) du contact par un doigt unique sur la surface sensible au toucher.

6. Le procédé de la revendication 5, dans lequel le premier comportement en réponse comprend l'affichage d'un ou plusieurs guides d'alignement (502) en combinaison avec l'objet affiché.

7. Le procédé de la revendication 6, dans lequel les un ou plusieurs guides d'alignement s'étendent à partir de l'objet affiché.

8. Le procédé de la revendication 6, dans lequel le premier comportement en réponse comprend un mouvement d'alignement de l'objet affiché sur détermination que l'objet affiché est plus près qu'un premier seuil de distance prédéterminée par rapport à un second objet affiché.

9. Le procédé de la revendication 6, dans lequel le second comportement en réponse comprend l'achèvement de l'affichage des un ou plusieurs guides d'alignement.

10. Le procédé de la revendication 1, dans lequel le second mouvement du contact par un doigt unique sur la surface sensible au toucher est un geste de tortillement (509).

11. Le procédé de la revendication 1, dans lequel le second mouvement du contact par un doigt unique sur la surface sensible au toucher fait passer le dispositif multifonction à un mode de fonctionnement suivant dans une série de deux ou plus modes de fonctionnement.

12. Le procédé de la revendication 11, comprenant en outre la délivrance d'un indice de changement de mode de fonctionnement après détection du second mouvement du contact par un doigt unique sur la surface sensible au toucher.

13. Le procédé de la revendication 1, comprenant en outre :
après achèvement de la seconde partie du premier geste, le retour à la réponse avec le premier comportement en réponse, en réponse à la détection d'un nouveau geste substantiellement semblable au premier geste.

14. Un dispositif multifonction (100) avec un afficheur et une surface sensible au toucher (112), le dispositif multifonction étant apte à implémenter le procédé de l'une quelconque des revendications 1 à 13.

15. Un support de stockage lisible par calculateur sur lequel sont stockées des instructions qui, lorsqu'elles sont exécutées par un dispositif multifonction (100) avec un afficheur et une surface sensible au toucher (112), font en sorte que le dispositif implémente le procédé de l'une des revendications 1 à 13.
